# EUROPEAN PATENT APPLICATION

(11) **EP 4 568 301 A1**
(43) Date of publication of application: **11.06.2025**
(21) Application number: 23849397.7
(22) Date of filing: 01.08.2023
(51) Int. Cl.: H04W 4/06

(54) **METHOD AND APPARATUS FOR MEASURING QUALITY OF EXPERIENCE OF MBS**

(30) Priority: 03.08.2022 CN 202210929323
(71) Applicant: Datang Mobile Communications Equipment Co., Ltd., Beijing 100085 (CN)
(72) Inventor: WANG, Ruiwei, Beijing 100085 (CN); NI, Chunlin, Beijing 100085 (CN); WANG, Haocheng, Beijing 100085 (CN)
(74) Representative: Cabinet Nony
(86) International application number: PCT/CN2023/110506
(87) International publication number: WO 2024/027691

(57) **Abstract**

Provided in the embodiments of the present disclosure are a method and apparatus for measuring the quality of experience of an MBS. The method is applied to a terminal, and comprises: on the basis of received first configuration information, determining a control action of a terminal for measuring the quality of experience of an MBS; or, sending, to a target base station, the first configuration information and/or an MBS quality of experience measurement report, which is generated by the terminal, wherein the first configuration information is used for determining the control action of the terminal for measuring the quality of experience of the MBS. The first configuration information is quality of experience configuration information, which comprises a quality of experience configuration of the MBS; and the control action comprises pausing, restoration, deletion or establishment.

## Description

### CROSS-REFERENCES TO RELATED APPLICATIONS

The present application claims priority to Chinese patent application No. 202210929323.3 filed on August 03, 2022, entitled "Method and Apparatus for Measuring Quality of Experience of MBS", which is hereby incorporated by reference in its entirety.

### FIELD

The present application relates to the field of communications, and in particular, to methods and apparatuses for quality of experience (QoE) measurement for multicast broadcast service (MBS).

### BACKGROUND

In order to improve user experience, the 3rd generation partnership project (3GPP) introduced the quality of experience (QoE) characteristic, to collect measurement information associated with user sensing of a user equipment (UE) in radio resource control (RRC) connected state. Continuous QoE measurement collection when the UE is in RRC connected state may be achieved based on the existing QoE measurement mobility continuity.

For the QoE measurement of the multicast broadcast service (MBS), it is necessary to consider that the UE not only supports the QoE measurement mobility continuity of the MBS in RRC connected state, but also supports the QoE measurement mobility continuity of the MBS in RRC idle state and RRC inactive state. However, there is currently no relevant technical support for how to perform continuous QoE measurement information collection for MBS when the UE is in mobile situation.

Therefore, how to perform continuous QoE measurement information collection for MBS when the UE is in mobile situation is an urgent problem in this field that needs to be solved.

### BRIEF SUMMARY

Embodiments of the present application provide methods and apparatuses for quality of experience (QoE) measurement for multicast broadcast service (MBS), to solve a problem that the traditional mechanism cannot continuously collect QoE measurement information for MBS.

An embodiment of the present application provides a method for quality of experience (QoE) measurement for multicast broadcast service (MBS), the method is performed by a terminal, and the method includes:
determining a control action of the terminal on a QoE measurement for an MBS based on received first configuration information; or
transmitting first configuration information and/or a QoE measurement report for an MBS generated by the terminal to a target base station, where the first configuration information is used to determine a control action of the terminal on a QoE measurement for an MBS;
where the first configuration information is QoE configuration information including a QoE configuration for the MBS, and the control action includes pausing, resuming, deleting or establishing.

In some embodiments, determining the control action of the terminal on the QoE measurement for the MBS based on the received first configuration information includes:
determining a collection area based on the first configuration information;
determining a belonging relationship between a current serving cell and the collection area; and
determining the control action of the terminal on the QoE measurement for the MBS based on the belonging relationship between the current serving cell and the collection area.

In some embodiments, determining the control action of the terminal on the QoE measurement for the MBS based on the belonging relationship between the current serving cell and the collection area includes:
determining whether the current serving cell is within the collection area; and
in case that the current serving cell is within the collection area, determining to establish or resume the QoE measurement for the MBS in the current serving cell; or, in case that the current serving cell is not within the collection area, determining to delete or pause the QoE measurement for the MBS in the current serving cell.

In some embodiments, before transmitting the first configuration information to the target base station, the method includes:
receiving a first request message transmitted from the target base station, where the first request message is used to obtain the first configuration information and/or the QoE measurement report for the MBS generated by the terminal.

In some embodiments, after transmitting the first configuration information to the target base station, the method includes:
determining a control action of the terminal on a QoE measurement for a specified MBS based on received second indication information,
where the second indication information is transmitted from a source base station or the target base station, and the QoE measurement for the specified MBS is QoE measurement for one or more of MBSs included in the first configuration information.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

An embodiment of the present application provides a method for quality of experience (QoE) measurement for multicast broadcast service (MBS), the method is performed by a target base station, and the method includes:
obtaining first configuration information; and
determining a control action of a terminal on a QoE measurement for an MBS based on the first configuration information,
where the first configuration information is QoE configuration information including a QoE configuration for the MBS, and the control action includes pausing, resuming, deleting or establishing.

In some embodiments, obtaining the first configuration information includes:
transmitting a first request message to the terminal for obtaining the first configuration information and/or a QoE measurement report for the MBS generated by the terminal; or
receiving a second message transmitted from a source base station, where the second message carries the first configuration information.

In some embodiments, receiving the second message transmitted from the source base station includes:
receiving the second message transmitted from the source base station, where the second message carries the first configuration information, and the second message is a RETRIEVE UE CONTEXT RESPONSE message.

In some embodiments, receiving the second message transmitted from the source base station includes:
receiving the second message transmitted from the source base station through an Xn interface or an NG interface, where the second message carries the first configuration information,
where the second message transmitted through the Xn interface is a HANDOVER REQUEST message;
the second message transmitted through the NG interface is a HANDOVER REQUEST message, and the second message is transmitted after the source base station transmits a HANDOVER REQUIRED message to a core network.

In some embodiments, determining the control action of the terminal on the QoE measurement for the MBS based on the first configuration information includes:
determining a collection area based on the first configuration information;
determining a belonging relationship between the target base station and the collection area; and
determining the control action of the terminal on the QoE measurement for the MBS based on the belonging relationship between the target base station and the collection area.

In some embodiments, determining the control action of the terminal on the QoE measurement for the MBS based on the belonging relationship between the target base station and the collection area includes:
determining whether the target base station is within the collection area; and
in case that the target base station is within the collection area, transmitting second indication information to the terminal, where the second indication information is used to indicate the terminal to resume or establish a QoE measurement for a specified MBS; or, in case that the target base station is not within the collection area, transmitting a second message to the terminal, where the second indication information is used to indicate the terminal to pause or delete a QoE measurement for a specified MBS;
where the second indication information is determined based on the first configuration information and MBSs supported by the target base station.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

In some embodiments, the second indication information includes one or more of the following:
a service type, used to indicate that a configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, where the control action includes pausing, resuming, deleting or establishing.

An embodiment of the present application provides a method for quality of experience (QoE) measurement for multicast broadcast service (MBS), the method is performed by a source base station, and the method includes:
determining a control action of a terminal on a QoE measurement for an MBS based on first configuration information; or
transmitting first configuration information to a target base station, where the first configuration information is used to determine a control action of a terminal on a QoE measurement for an MBS;
where the first configuration information is QoE configuration information including a QoE configuration for the MBS, and the control action includes pausing, resuming, deleting or establishing.

In some embodiments, determining the control action of the terminal on the QoE measurement for the MBS based on the first configuration information includes:
determining a collection area based on the first configuration information;
determining a belonging relationship between the source base station and the collection area; and
determining the control action of the terminal on the QoE measurement for the MBS based on the belonging relationship between the source base station and the collection area.

In some embodiments, determining the control action of the terminal on the QoE measurement for the MBS based on the belonging relationship between the source base station and the collection area includes:
determining whether the source base station is within the collection area; and
in case that the source base station is within the collection area, transmitting second indication information to the terminal, where the second indication information is used to indicate the terminal to resume or establish a QoE measurement for a specified MBS; or, in case that the source base station is not within the collection area, transmitting second indication information to the terminal, where the second indication information is used to indicate the terminal to pause or delete a QoE measurement for a specified MBS;
where the second indication information is determined based on the first configuration information and MBSs supported by the source base station.

In some embodiments, before transmitting the first configuration information to the target base station, the method includes:
determining whether the target base station is different from the source base station;
in case that the target base station is different from the source base station, transmitting a second message to the target base station, where the second message carries the first configuration information.

In some embodiments, transmitting the second message to the target base station includes:
in case that the terminal is in radio resource control (RRC) connected state at the source base station, transmitting the second message to the target base station based on a determined target interface; or
in case that the terminal is in radio resource control (RRC) inactive state after a connection of the terminal is released by the source base station, transmitting the second message to the target base station based on a retrieve terminal context request message.

In some embodiments, transmitting the second message to the target base station based on the determined target interface includes:
in case that the target interface is an Xn interface, the second message is a HANDOVER REQUEST message; or
in case that the target interface is an NG interface, the second message is a HANDOVER REQUEST message, and the second message is transmitted after the source base station transmits a HANDOVER REQUIRED message to a core network.

In some embodiments, the second message is transmitted to the target base station based on the retrieve terminal context request message, and the second message is a RETRIEVE UE CONTEXT RESPONSE message.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

In some embodiments, the second indication information includes one or more of the following:
a service type, used to indicate that a configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, where the control action includes pausing, resuming, deleting or establishing.

An embodiment of the present application provides a terminal, including: a memory, a transceiver, and a processor,
where the memory is used for storing a computer program; the transceiver is used for receiving and transmitting data under control of the processor; and the processor is used for reading the computer program in the memory and performing the above method performed by the terminal.

An embodiment of the present application provides a target base station, including: a memory, a transceiver, and a processor,
where the memory is used for storing a computer program; the transceiver is used for receiving and transmitting data under control of the processor; and the processor is used for reading the computer program in the memory and performing the above method performed by the target base station.

An embodiment of the present application provides a source base station, including: a memory, a transceiver, and a processor,
where the memory is used for storing a computer program; the transceiver is used for receiving and transmitting data under control of the processor; and the processor is used for reading the computer program in the memory and performing the above method performed by the source base station.

An embodiment of the present application provides an apparatus for quality of experience (QoE) measurement for multicast broadcast service (MBS), used in a terminal, including:
a first determining module, used for determining a control action of the terminal on a QoE measurement for an MBS based on received first configuration information; or
a first transmitting module, used for transmitting first configuration information and/or a QoE measurement report for an MBS generated by the terminal to a target base station, where the first configuration information is used to determine a control action of the terminal on a QoE measurement for an MBS;
where the first configuration information is QoE configuration information including a QoE configuration for the MBS, and the control action includes pausing, resuming, deleting or establishing.

An embodiment of the present application provides an apparatus for quality of experience (QoE) measurement for multicast broadcast service (MBS), used in a target base station, including:
a second obtaining module, used for obtaining first configuration information; and
a second determining module, used for determining a control action of a terminal on a QoE measurement for an MBS based on the first configuration information,
where the first configuration information is QoE configuration information including a QoE configuration for the MBS, and the control action includes pausing, resuming, deleting or establishing.

An embodiment of the present application provides an apparatus for quality of experience (QoE) measurement for multicast broadcast service (MBS), used in a source base station, including:
a third determining module, used for determining a control action of a terminal on a QoE measurement for an MBS based on first configuration information; or
a third transmitting module, used for transmitting first configuration information to a target base station, where the first configuration information is used to determine a control action of a terminal on a QoE measurement for an MBS;
where the first configuration information is QoE configuration information including a QoE configuration for the MBS, and the control action includes pausing, resuming, deleting or establishing.

An embodiment of the present application provides a computer-readable storage medium, where the computer-readable storage medium stores a computer program for causing a computer to perform any of the above methods performed by the terminal, or the target base station, or the source base station.

An embodiment of the present application provides a communication device storing a computer program, where the computer program is used to cause the communication device to perform any of the above methods performed by the terminal, or the target base station, or the source base station.

An embodiment of the present application provides a processor-readable storage medium storing a computer program, where the computer program is used to cause a processor to perform any of the above methods performed by the terminal, or the target base station, or the source base station.

An embodiment of the present application provides a chip product storing a computer program, where the computer program is used to cause the chip product to perform any of the above methods performed by the terminal, or the target base station, or the source base station..

In the methods and apparatuses for QoE measurement for MBS provided by the embodiments of the present application, the QoE parameters associated with MBS is included in traditional QoE measurement configuration, and during the movement of the terminal, the terminal controls the QoE measurement for the MBS by itself, or the terminal transmits the first configuration parameter including the QoE measurement configuration associated with the MBS to the target base station, and then the target base station controls the QoE measurement for the MBS, which ensures a continuity of QoE measurement for the MBS by the terminal during the movement procedure.

### BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative work for those skilled in the art.
FIG. 1 is a first schematic flowchart of a method for quality of experience measurement for multicast broadcast service (MBS) according to an embodiment of the present application;
FIG. 2 is a second schematic flowchart of a method for quality of experience measurement for MBS according to an embodiment of the present application;
FIG. 3 is a third schematic flowchart of a method for quality of experience measurement for MBS according to an embodiment of the present application;
FIG. 4 is a first schematic flowchart of an implementation of a method for quality of experience measurement for MBS according to an embodiment of the present application;
FIG. 5 is a second schematic flowchart of an implementation of a method for quality of experience measurement for MBS according to an embodiment of the present application;
FIG. 6 is a schematic structural diagram of a terminal according to an embodiment of the present application;
FIG. 7 is a schematic structural diagram of a target base station according to an embodiment of the present application;
FIG. 8 is a schematic structural diagram of a source base station according to an embodiment of the present application;
FIG. 9 is a first schematic structural diagram of an apparatus for quality of experience measurement for MBS according to an embodiment of the present application;
FIG. 10 is a second schematic structural diagram of an apparatus for quality of experience measurement for MBS according to an embodiment of the present application; and
FIG. 11 is a third schematic structural diagram of an apparatus for quality of experience measurement for MBS according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described below with reference to the accompanying drawings in the embodiments of the present application. The described embodiments are only some of the embodiments of the present application, not all of them. Based on the embodiments of the present application, all other embodiments obtained by those skilled in the art without making creative efforts fall within the scope of protection of the present application.

In order to help understand the solutions in the embodiments of the present application, the following briefly introduces related concepts that may be involved in the present application.

### (1) Introduction to multicast broadcast service or broadcast multicast service (multicast broadcast service, MBS)

Most of the current communication between a network and a user equipment (UE) is in a form of unicast, that is, a mode of one-to-one. In order to support a communication of one-to-many and reduce network resource consumption, multicast and broadcast are introduced.

For multicast services, the same services and content are provided to a group of designated users at the same time, and the UE may receive multicast services in connected state. For a base station that supports multicast, the base station may use a set of common resources to provide services for a specific group of UEs. In case that the UE hands over to a base station that does not support multicast, since MBS radio bearer (MRB) cannot be established, services may only continue to be provided through UE specific data radio bearer (DRB), that is, multicast service content is transferred in unicast.

For broadcast services, the same services and content are provided to all UEs in a specific area. The UEs may receive broadcast services in idle state, inactive state or connected state. In case that the UE moves in connected state, it is necessary to ensure the continuity of broadcast service of the UE and select a cell that supports the same service as the target cell.

Base stations may already interact information of whether neighboring cells support multicast and broadcast through interfaces, which includes information of whether broadcast and/or multicast is supported and information of specific service type. The service type may be identified by using temporary mobile group identity (TMGI), or service area identity (SAI).

The UE may receive broadcast services in idle state. Since cell reselection in idle state needs to consider selecting a cell that supports broadcast services, in case that the UE is receiving broadcast services or intends to receive a broadcast service, cell reselection frequency priority may be assigned to a high priority.

### (2) Quality of experience (QoE) measurement procedure

The protocol defines two types of QoE measurements. One type is signaling-based QoE measurement, with a procedure that operation administration and maintenance (OAM) transmits QoE configuration to a core network (CN), the CN transmits the QoE configuration to a radio access network (RAN) side, and the RAN side forwards the QoE configuration to the UE. The configuration in signaling-based is for specific UE. Another type is management-based QoE measurement, with a procedure that the OAM directly transmits QoE configuration to the RAN side and the RAN side forwards the QoE configuration to a UE. In management-based QoE measurement, it is currently configured for multiple UEs. In the two system frameworks of signaling-based measurement configuration and management-based measurement configuration, the procedures of the RAN side transmitting the QoE configuration to the UE are the same, and the configuration parameters are also the same. Both of them transmits the QoE configuration to the UE through radio resource control (RRC) signaling.

The related protocol defines QoE measurement management parameters, including the following (not all listed).
a. QoE collection entity address, used to define the IP address to which the QoE measurement collection (QMC) records shall be transferred. Either Ipv4 address or Ipv6 address may be used.
b. QoE reference, used to define the network request session. The QoE reference shall be globally unique, therefore it is composed as follows:
   mobile country code (MCC) + mobile network code (MNC) + QMC ID, where the MCC and MNC are coming with trace activation request from the management system to identify one public land mobile network (PLMN) containing the management system, and QMC ID is a 3 byte Octet String.
c. QMC configuration file, which is QoE configuration file defined by application layer service.
d. Service type, used to define service types for QoE measurement, including streaming media, multimedia telephony service for IP multimedia subsystem (IMS) (MTSI), virtual reality (VR), etc.
e. Area scope, used to define the list in terms of cells or tracking area (TA), etc., where the QoE management collection shall take place.

After an access stratum (AS) of the UE receives the QoE configuration through an RRC message, the AS transmits the QoE configuration to an application layer through a directory defined by ATtention command (AT command), including the parameters of service type, QoE reference and QMC configuration file. In case that the service of the service type corresponding to the configuration starts to occur, the application layer starts to perform measurement based on the configuration file and generates a QoE measurement report based on configuration conditions. Once the QoE measurement report is generated, the application layer of the UE transmits the QoE report to the AS of the UE through the AT command, and the AS of the UE immediately transmits the QoE report to RAN through an RRC message. RAN transmits the QoE report to a server corresponding to the IP address defined in the configuration file. Then, the procedures of QoE configuration and measurement report collection are completed.

The traditional QoE measurement only supports measurement in connected state. After the introduction of QoE measurement for broadcast multicast services, combined with the mobility of the UE, it is necessary to consider that the continuity of QoE measurement for broadcast multicast services should be ensured when the UE is in different RRC states.

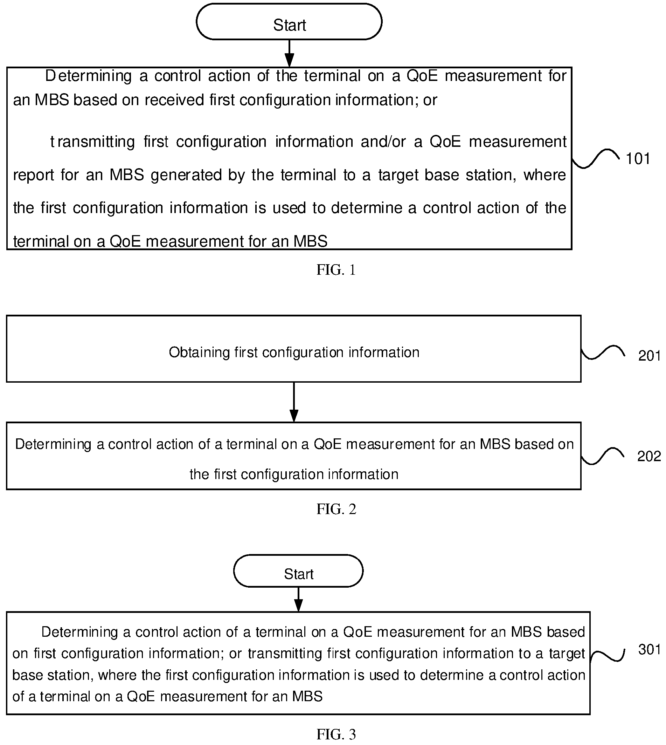

FIG. 1 is a first schematic flowchart of a method for quality of experience (QoE) measurement for multicast broadcast service (MBS) according to an embodiment of the present application. The method may be performed by a terminal, such as a user equipment (UE). As shown in FIG. 1, the method includes:
step 101: determining a control action of the terminal on a QoE measurement for an MBS based on received first configuration information; or
transmitting first configuration information and/or a QoE measurement report for an MBS generated by the terminal to a target base station, where the first configuration information is used to determine a control action of the terminal on a QoE measurement for an MBS;
where the first configuration information is QoE configuration information including a QoE configuration for the MBS, and the control action includes pausing, resuming, deleting or establishing.

In an embodiment, an operation administration and maintenance (OAM) or a server provides configuration file for QoE measurement to the terminal and forwards the configuration file to the terminal through an access network, such as a base station. The terminal has already obtained the configuration file for QoE measurement when the terminal initially accesses a serving base station (source base station), and may obtain the first configuration information from the configuration file. As such, during the movement of the terminal, the terminal may determine whether to continue to perform QoE measurement for one or some of the same MBSs based on the first configuration information. For example, the terminal may determine to continue to perform QoE measurement for one or some of the same MBSs through resuming or establishing, etc., or does not continue to perform QoE measurement for one or some of the same MBSs through pausing or deleting, etc.

In an embodiment, in addition to the terminal itself being able to determine and perform a control of QoE measurement for MBS, the terminal may also assist the target base station, and the target base station may determine and perform a control of QoE measurement for MBS. The specific method of the terminal assisting the target base station is that the terminal transmits the above first configuration information to the target base station, and after the target base station obtains the first configuration information, the target base station may determine whether to continue to perform QoE measurement for one or some of the same MBSs directly based on the first configuration information or in combination with the capabilities and needs of the target base station. Similarly, in case that the QoE measurement for one or some of the same MBSs needs to continue to be performed, it may be achieved through resuming or establishing, etc., or in case that the QoE measurement for one or some of the same MBSs does not need to continue to be performed, it may be achieved through pausing or deleting, etc.

The first configuration information may be transmitted from the terminal to the target base station, or may be transmitted from the source base station to the target base station. In a situation where the terminal only transmits the QoE measurement report for the MBS to the target base station, the first configuration information is transmitted to the target base station from the source base station.

While transmitting the first configuration information to the target base station, the QoE measurement report for the MBS generated by the terminal may also be reported. The QoE measurement report for the MBS is generated based on the first configuration information.

The above mentioned first configuration information includes configuration parameters of QoE measurement for the MBS and information associated with each configuration parameter. Different from QoE measurement in related art, the first configuration information may also include QoE measurement configuration associated with the MBS.

In the method for QoE measurement for MBS provided by the embodiments of the present application, the QoE parameters associated with MBS is included in traditional QoE measurement configuration, and during the movement of the terminal, the terminal controls the QoE measurement for the MBS by itself, or the terminal transmits the first configuration parameter including the QoE measurement configuration associated with the MBS to the target base station, and then the target base station controls the QoE measurement for the MBS, which ensures a continuity of QoE measurement for the MBS by the terminal during the movement procedure.

In some embodiments, determining the control action of the terminal on the QoE measurement for the MBS based on the received first configuration information includes:
determining a collection area based on the first configuration information;
determining a belonging relationship between a current serving cell and the collection area; and
determining the control action of the terminal on the QoE measurement for the MBS based on the belonging relationship between the current serving cell and the collection area.

In an embodiment, after the terminal receives the first configuration information transmitted from the OAM or the server, the terminal determines the collection area. For example, based on an area range in the first configuration information, which is mainly used to define a list of cells or a list of tracking areas (TAs), etc. for QoE measurement collection, it is determined that QoE measurement for MBS needs to continue to be performed in which cell or cells; or, based on a service type included in the first configuration information, it is determined for which MBS or MBSs the terminal needs to continue to perform the QoE measurement, or for which MBS or MBSs the terminal does not need to continue to perform the QoE measurement.

The terminal determines the belonging relationship between the current serving cell and the above mentioned collection area. The belonging relationship may be whether the current serving cell is a cell indicated by the above mentioned collection area where QoE measurement for the MBS needs to continue to be performed, or whether the current serving cell supports the MBS indicated in the first configuration information. Based on the determination result, the QoE measurement for the MBS by the terminal may be paused or resumed, or the QoE measurement for the MBS by the terminal may be deleted or established.

For example, if the serving cell does not belong to the above mentioned collection area, the QoE measurement for the MBS by the terminal is deleted or paused; or, if the serving cell belongs to the above mentioned collection area, the QoE measurement for the MBS by the terminal is established or resumed.

In some embodiments, determining the control action of the terminal on the QoE measurement for the MBS based on the belonging relationship between the current serving cell and the collection area includes:
determining whether the current serving cell is within the collection area; and
in case that the current serving cell is within the collection area, determining to establish or resume the QoE measurement for the MBS in the current serving cell; or, in case that the current serving cell is not within the collection area, determining to delete or pause the QoE measurement for the MBS in the current serving cell.

In an embodiment, the terminal determines the collection area based on the first configuration information, and determines whether the current serving cell is within the collection area.

If it is determined that the current serving cell is within the above mentioned collection area, it is determined to establish or resume the QoE measurement for the MBS in the current serving cell.

If it is determined that the current serving cell is not within the above mentioned collection area, it is determined to pause or delete the QoE measurement for the MBS. Deleting the QoE measurement for the MBS here refers to releasing the resources corresponding to the QoE measurement for the MBS, which means that if the QoE measurement for the MBS needs to be performed in other cells that support the MBS and are within the collection area, a connection corresponding to the QoE measurement for the MBS needs to be established to obtain the corresponding resources.

In some embodiments, before transmitting the first configuration information to the target base station, the method includes:
receiving a first request message transmitted from the target base station, where the first request message is used to obtain the first configuration information and/or the QoE measurement report for the MBS generated by the terminal.

In an embodiment, the first request message transmitted from the target base station to the terminal is used to obtain the first configuration information at the terminal side and/or the QoE measurement report for the MBS generated by the terminal.

The first request message may be a traditional interface message or a customized new message. For example, associated information used for obtaining the first configuration information at the terminal side and/or the QoE measurement report for the MBS generated by the terminal may be added to the traditional interface message; or, the associated information used for obtaining the first configuration information at the terminal side and/or the QoE measurement report for the MBS generated by the terminal may be included in a new message.

In some embodiments, after transmitting the first configuration information to the target base station, the method includes:
determining a control action of the terminal on a QoE measurement for a specified MBS based on received second indication information,
where the second indication information is transmitted from a source base station or the target base station, and the QoE measurement for the specified MBS is QoE measurement for one or more of MBSs included in the first configuration information.

In an embodiment, in case that the terminal assists the target base station in controlling QoE measurement for MBS, after the terminal transmits the first configuration information to the target base station, the target base station transmits the second indication information to the terminal based on the capabilities supported by the target base station or the measurement requirements, where the second indication information includes information associated with the specified MBS, such as information of a list of temporary mobile group identities (TMGIs), an MBS type, a measurement duration, a remaining duration and other information.

After receiving the second indication information, the terminal determines, based on the specific content in the second indication information, to pause or resume the QoE measurement for the MBS by the terminal, or to delete or establish the QoE measurement for the MBS by the terminal. For example, based on the list of TMGIs, it is determined that which specified MBS or MBSs need to be subjected to QoE measurement; or, in case that the remaining duration of a certain MBS is zero, it is determined to delete the QoE measurement for this MBS by the terminal. The QoE measurement for the specified MBS is a QoE measurement for one or more of all the MBSs included in the first configuration information.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of TMGIs, where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

In an embodiment, the above mentioned first configuration information is different from the traditional QoE measurement configuration information, where the above mentioned first configuration information includes QoE measurement configuration information associated with the MBS, and may specifically include at least one of the following:
an addition of configuration associated with MBS to a service type configuration, such as broadcast service, multicast service, or broadcast and multicast service;
information of a list of TMGIs, where the list of TMGIs includes one or more TMGIs, and each of the TMGIs is used to indicate which TMGI's corresponding QoE measurement needs to be collected for the MBS;
a measurement duration, used to indicate a total duration for which a terminal performs QoE measurement for a certain MBS; or
a remaining duration, used to indicate a remaining duration for which a terminal performs QoE measurement for a certain MBS or certain MBSs.

For example, in the initial first configuration information received by the terminal, the configuration information for each MBS is detailed as follows:
a measurement duration for MBS A is T1, and a remaining duration is T1; and
a measurement duration for MBS B is T2, and a remaining duration is T2.

After a connection is established with a cell of the source base station, a QoE measurement for MBS A with a duration of t1 and a QoE measurement for MBS B with a duration of t2 are simultaneously performed.

In the subsequent first configuration information forwarded to the target base station, the latest configuration information is detailed as follows:
a measurement duration for MBS A is T1, and a remaining duration is T1-t1; and
a measurement duration for MBS B is T2, and a remaining duration is T2-t2.

In this way, after receiving the first configuration information, the target base station may determine whether it is necessary to continue to perform QoE measurement for one or some MBSs based on the remaining duration configured in the first configuration information.

The above various types of configuration information flexibly constitute the first configuration information, which is used to indicate the associated parameters for the terminal to perform QoE measurement for the MBS. It is beneficial for the terminal to determine more flexibly how to perform QoE measurement for the MBS based on the content in the first configuration information.

In the method for QoE measurement for MBS provided by the embodiments of the present application, the QoE parameters associated with MBS is included in traditional QoE measurement configuration, and during the movement of the terminal, the terminal controls the QoE measurement for the MBS by itself, or the terminal transmits the first configuration parameter including the QoE measurement configuration associated with the MBS to the target base station, and then the target base station controls the QoE measurement for the MBS, which ensures a continuity of QoE measurement for the MBS by the terminal during the movement procedure.

FIG. 2 is a second schematic flowchart of a method for quality of experience (QoE) measurement for multicast broadcast service (MBS) according to an embodiment of the present application, where the method may be performed by a target base station. As shown in FIG. 2, the method includes:
step 201: obtaining first configuration information; and
determining a control action of a terminal on a QoE measurement for an MBS based on the first configuration information,
where the first configuration information is QoE configuration information including a QoE configuration for the MBS, and the control action includes pausing, resuming, deleting or establishing.

In an embodiment, based on a mobility of the terminal, during a movement procedure, the terminal may need to hand over from a cell currently providing services to a cell corresponding to the target base station; or, after being released from a cell of a source base station, the terminal enters a cell corresponding to the target base station. However, since the current target base station has not obtained the first configuration information, the target base station needs to obtain the first configuration information and determine whether to continue to perform QoE measurement for one or some of the same MBSs based on the first configuration information. For example, the target base station may determine to continue to perform QoE measurement for one or some of the same MBSs through resuming or establishing, etc., or to does not continue to perform QoE measurement for one or some of the same MBSs through pausing or deleting, etc.

In an embodiment, the target base station may determine by itself whether to continue to perform QoE measurement for one or some of the same MBSs based on the first configuration information, or may forward the configuration information to the next target base station in a case where the target base station does not need to continue to perform QoE measurement for one or some of the same MBSs.

In the method for QoE measurement for MBS provided by the embodiments of the present application, the QoE parameters associated with MBS is included in traditional QoE measurement configuration, and during the movement of the terminal, the terminal controls the QoE measurement for the MBS by itself, or the terminal transmits the first configuration parameter including the QoE measurement configuration associated with the MBS to the target base station, and then the target base station controls the QoE measurement for the MBS, which ensures a continuity of QoE measurement for the MBS by the terminal during the movement procedure.

In some embodiments, obtaining the first configuration information includes:
transmitting a first request message to the terminal for obtaining the first configuration information and/or a QoE measurement report for the MBS generated by the terminal; or
receiving a second message transmitted from a source base station, where the second message carries the first configuration information.

In an embodiment, there are multiple ways for the target base station to obtain the first configuration information, which may be obtained from the terminal or from the source base station. In case that it is obtained from the terminal, a first request message is transmitted to the terminal for obtaining the first configuration information at the terminal side. The first request message may also be used to obtain the QoE measurement report for the MBS at the terminal side.

In case that it is obtained from the source base station, it may be that the source base station actively transmits the first configuration information to the target base station after the terminal hands over from the cell corresponding to the source base station to the cell corresponding to the target base station; or may be that the target base station transmits a request message to source base station to obtain the first configuration information from the source base station side after a connection of the terminal is released by the source base station and the terminal connects to a corresponding cell of the target base station.

As such, through various ways, the target base station obtains the corresponding first configuration information, to determine whether the terminal continues to perform QoE measurement for one or some MBSs, which makes the implementation more flexible.

In some embodiments, receiving the second message transmitted from the source base station includes:
receiving the second message transmitted from the source base station, where the second message carries the first configuration information, and the second message is a RETRIEVE UE CONTEXT RESPONSE message.

In an embodiment, in case that the target base station obtains the first configuration information from the source base station, the target base station transmits a corresponding request message to the source base station, and the target base station receives the second message transmitted from the source base station, and the target base station obtains the first configuration information from the second message. The second message may be a RETRIEVE UE CONTEXT RESPONSE message. Compared with the traditional RETRIEVE UE CONTEXT RESPONSE message, the difference is that the first configuration information is added to an original RETRIEVE UE CONTEXT RESPONSE message to be the second message. The above mentioned second message may also be other radio resource control (RRC) messages.

In some embodiments, receiving the second message transmitted from the source base station further includes:
receiving the second message transmitted from the source base station through an Xn interface or an NG interface, where the second message carries the first configuration information,
where the second message transmitted through the Xn interface is a HANDOVER REQUEST message;
the second message transmitted through the NG interface is a HANDOVER REQUEST message, and the second message is transmitted after the source base station transmits a HANDOVER REQUIRED message to a core network.

In an embodiment, in case that the second message received by the target base station from the source base station is actively transmitted by the source base station, it is generally that the terminal is in RRC connected state and hands over from cell A corresponding to the source base station to cell B corresponding to the target base station. In case that there is a corresponding Xn interface between the cell A and the cell B, the source base station transmits the second message to the target base station through the Xn interface, where the second message may be the HANDOVER REQUEST message or an interface message corresponding to the Xn interface. In case that there is no corresponding Xn interface between the cell A and the cell B, the second message is forwarded through the core network, that is, the second message is transmitted through the NG interface, where the second message may be the HANDOVER REQUEST message transmitted from the core network to the target base station after the source base station transmits the HANDOVER REQUIRED message to the core network, or may be other interface messages corresponding to the NG interface.

As such, the first configuration information at the source base station side is obtained directly from the source base station or is forwarded through the source base station, which achieves a flexible transmission of the first configuration information.

In some embodiments, determining the control action of the terminal on the QoE measurement for the MBS based on the first configuration information includes:
determining a collection area based on the first configuration information;
determining a belonging relationship between the target base station and the collection area; and
determining the control action of the terminal on the QoE measurement for the MBS based on the belonging relationship between the target base station and the collection area.

In an embodiment, after the target base station obtains the first configuration information, the target base station determines the collection area based on the specific parameters in the first configuration information. The collection area may be in a unit of a base station, a cell, or a beam, which is mainly used to represent which range at which MBS needs to be subjected to QoE measurement.

Then, the target base station determines, based on the determined collection area, the belonging relationship between the target base station currently connected to the terminal and the collection area. The belonging relationship is mainly used to indicate whether the service area provided by the target base station is within the above mentioned collection area. If the service area is not within the collection area, the above mentioned QoE measurement for the MBS is deleted or paused. If the service area is within the collection area, the above mentioned QoE measurement for the MBS is established or resumed, or the above mentioned first configuration information is adjusted based on capabilities supported by the target base station and the measurement result, and then is transmitted to the terminal.

In some embodiments, determining the control action of the terminal on the QoE measurement for the MBS based on the belonging relationship between the target base station and the collection area includes:
determining whether the target base station is within the collection area; and
in case that the target base station is within the collection area, transmitting second indication information to the terminal, where the second indication information is used to indicate the terminal to resume or establish a QoE measurement for a specified MBS; or, in case that the target base station is not within the collection area, transmitting a second message to the terminal, where the second indication information is used to indicate the terminal to pause or delete a QoE measurement for a specified MBS;
where the second indication information is determined based on the first configuration information and MBSs supported by the target base station.

In an embodiment, the collection area is determined based on the first configuration information, and whether the target base station is within the collection area is determined.

In case that the target base station is within the collection area, it is determined that it is necessary to resume or establish the QoE measurement for one or some MBSs, and then the second indication information is transmitted to the terminal, where the second indication information is information for resuming or establishing QoE measurement for specified MBS.

In case that the target base station is not within the collection area, it is determined that the terminal needs to pause or delete the QoE measurement for one or some MBSs, and the second indication information is transmitted to a third terminal, where the second indication information is used to indicate the terminal to pause or delete the QoE measurement for the MBS.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

In an embodiment, the above mentioned first configuration information is different from the traditional QoE measurement configuration information, where the above mentioned first configuration information includes QoE measurement configuration information associated with the MBS, and may specifically include at least one of the following:
an addition of configuration associated with MBS to a service type configuration, such as broadcast service, multicast service, or broadcast and multicast service;
information of a list of TMGIs, where the list of TMGIs includes one or more TMGIs, and each of the TMGIs is used to indicate which TMGI's corresponding QoE measurement needs to be collected for the MBS;
a measurement duration, used to indicate a total duration for which a terminal performs QoE measurement for a certain MBS; or
a remaining duration, used to indicate a remaining duration for which a terminal performs QoE measurement for a certain MBS or certain MBSs.

The above various types of configuration information flexibly constitute the first configuration information, which is used to indicate the associated parameters for the terminal to perform QoE measurement for the MBS. It is beneficial for the terminal to determine more flexibly how to perform QoE measurement for the MBS based on the content in the first configuration information.

In some embodiments, the second indication information includes one or more of the following:
a service type, used to indicate that a configuration for MBS includes broadcast and/or multicast;
information of a list of TMGIs, where the list of TMGIs includes one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, where the control action includes pausing, resuming, deleting or establishing.

In an embodiment, after receiving the first configuration information, the target base station determines the corresponding second indication information based on its own supported capabilities or measurement requirements, and transmits the second indication information to the terminal. The second indication information may indicate for which MBS the terminal needs to continue to perform QoE measurement, or for which MBS the terminal does not need to continue to perform QoE measurement. The second indication information may include at least one of the following:
a service type, used to indicate that the configuration for MBS includes broadcast and/or multicast;
information of a list of TMGIs, where the list of TMGIs includes one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity, where the QoE session identity has a corresponding relationship with a QoE reference in the traditional QoE measurement configuration information, or they are the same; or
control indication information, used to indicate the control action of the terminal on the QoE measurement for the MBS, where the control action includes pausing, resuming, deleting or establishing, that is, the specific action of the terminal on the QoE measurement for the MBS may be determined directly based on the control indication information.

In the method for QoE measurement for MBS provided by the embodiments of the present application, the QoE parameters associated with MBS is included in traditional QoE measurement configuration, and during the movement of the terminal, the terminal controls the QoE measurement for the MBS by itself, or the terminal transmits the first configuration parameter including the QoE measurement configuration associated with the MBS to the target base station, and then the target base station controls the QoE measurement for the MBS, which ensures a continuity of QoE measurement for the MBS by the terminal during the movement procedure.

FIG. 3 is a third schematic flowchart of a method for quality of experience (QoE) measurement for multicast broadcast service (MBS) according to an embodiment of the present application, where the method may be performed by a source base station. As shown in FIG. 3, the method includes:
step 301: determining a control action of a terminal on a QoE measurement for an MBS based on first configuration information; or
transmitting first configuration information to a target base station, where the first configuration information is used to determine a control action of a terminal on a QoE measurement for an MBS;
where the first configuration information is QoE configuration information including a QoE configuration for the MBS, and the control action includes pausing, resuming, deleting or establishing.

In an embodiment, the source base station may obtain the first configuration information transmitted to the terminal from an operation administration and maintenance (OAM) or a server, and the source base station itself determines whether the terminal continues to perform QoE measurement for one or some of the same MBSs. For example, it may be that the terminal continues to perform QoE measurement for one or some of the same MBSs through resuming or establishing, etc., or to does not continue to perform QoE measurement for one or some of the same MBSs through pausing or deleting, etc.

In an embodiment, the source base station may assist the target base station in determining whether the terminal needs to continue to perform QoE measurement for one or some of the same MBSs after the terminal accesses the cell corresponding to the target base station. The main method is to forward the first configuration information of the source base station to the target base station, and then the target base station determines whether the terminal needs to continue to perform QoE measurement for one or some of the same MBSs based on the first configuration information.

The above mentioned first configuration information includes configuration parameters of QoE measurement for the MBS and information associated with each configuration parameter. Different from QoE measurement in related art, the first configuration information may also include QoE measurement configuration associated with the MBS.

In the method for QoE measurement for MBS provided by the embodiments of the present application, the QoE parameters associated with MBS is included in traditional QoE measurement configuration, and during the movement of the terminal, the terminal controls the QoE measurement for the MBS by itself, or the terminal transmits the first configuration parameter including the QoE measurement configuration associated with the MBS to the target base station, and then the target base station controls the QoE measurement for the MBS, which ensures a continuity of QoE measurement for the MBS by the terminal during the movement procedure.

In some embodiments, determining the control action of the terminal on the QoE measurement for the MBS based on first configuration information includes:
determining a collection area based on the first configuration information;
determining a belonging relationship between the source base station and the collection area; and
determining the control action of the terminal on the QoE measurement for the MBS based on the belonging relationship between the source base station and the collection area.

In an embodiment, the source base station determines the corresponding collection area based on the first configuration information. For example, based on an area range included in the first configuration information, which is mainly used to define a list of cells or a list of tracking areas (TAs), etc. for QoE measurement collection, it is determined that QoE measurement for MBS needs to continue to be performed in which cell or cells, or in which tracking areas; or, based on a service type included in the first configuration information, it is determined which MBS or MBSs the terminal needs to continue to perform the QoE measurement, or which MBS or MBSs the terminal does not need to continue to perform the QoE measurement.

The source base station determines the belonging relationship between the source base station itself and the collection area. The belonging relationship may be whether a current serving cell of the source base station is within the above mentioned collection area, a cell indicated by the above mentioned collection area where QoE measurement for the MBS needs to continue to be performed, or whether the current serving cell supports the MBS indicated in the first configuration information. Based on the determination result, the QoE measurement for the MBS performed by the terminal may be paused or resumed, or the QoE measurement for the MBS performed by the terminal may be deleted or established.

For example, if the serving cell does not belong to the above mentioned collection area, the QoE measurement for the MBS by the terminal is deleted or paused; or, if the serving cell belongs to the above mentioned collection area, the QoE measurement for the MBS performed by the terminal is established or resumed.

In some embodiments, determining the control action of the terminal on the QoE measurement for the MBS based on the belonging relationship between the source base station and the collection area includes:
determining whether the source base station is within the collection area; and
in case that the source base station is within the collection area, transmitting second indication information to the terminal, where the second indication information is used to indicate the terminal to resume or establish a QoE measurement for a specified MBS; or, in case that the source base station is not within the collection area, transmitting second indication information to the terminal, where the second indication information is used to indicate the terminal to pause or delete a QoE measurement for a specified MBS;
where the second indication information is determined based on the first configuration information and MBSs supported by the source base station.

In an embodiment, after obtaining the first configuration information, the source base station determines the corresponding collection area based on the associated parameters in the first configuration information.

In an embodiment, it is determined whether the source base station is within the above mentioned collection area. For example, the collection area represents a list of multiple cells, and it is determined whether a cell identifier corresponding to the cell where the source base station provides services to the terminal is in this list, and if the cell identifier is in this list, it is determined that the source base station is within the above mentioned collection area; or, if the cell identifier is not in this list, it is determined that the source base station is not within the above mentioned collection area. In an embodiment, based on whether a service range provided by the source base station is within the coverage of the collection area, it is determined that the source base station is within the above mentioned collection area if the service range provided by the source base station is within the coverage of the collection area; or, it is determined that the source base station is not within the above mentioned collection area if the service range provided by the source base station is not within the coverage of the collection area.

In case that it is determined that the source base station is within the collection area, the source base station transmits the second indication information to the terminal, where the second indication information is used to indicate the terminal to resume or establish the QoE measurement for the specified MBS.

In case that it is determined that the source base station is not within the collection area, the source base station transmits the second indication information to the terminal, where the second indication information is used to indicate the terminal to pause or delete the QoE measurement for the specified MBS. The above mentioned QoE measurement for the specified MBS may be a QoE measurement for one or more of the MBSs included in the first configuration information, which may be determined based on the capabilities for MBS supported by the base station.

The above mentioned second indication information is determined based on the first configuration information and the MBSs supported by the source base station.

In some embodiments, before transmitting the first configuration information to the target base station, the method includes:
determining whether the target base station is different from the source base station;
in case that the target base station is different from the source base station, transmitting a second message to the target base station, where the second message carries the first configuration information.

In an embodiment, the source base station needs to transmit the first configuration information to the target base station only when the cell corresponding to the source base station and the cell corresponding to the target base station accessed by the terminal do not belong to the same base station.

In some embodiments, transmitting the second message to the target base station includes:
in case that the terminal is in radio resource control (RRC) connected state at the source base station, transmitting the second message to the target base station based on a determined target interface; or
in case that the terminal is in radio resource control (RRC) inactive state after a connection of the terminal is released by the source base station, transmitting the second message to the target base station based on a retrieve terminal context request message.

In an embodiment, in case that the terminal is in RRC connected state at the source base station, the terminal determines to hand over to a target interface corresponding to a target cell during cell handover preparation procedure, and the source base station transmits the second message to the target base station through the target interface to transfer the first configuration information at the source base station side. In case that there is an Xn interface between the target base station and the source base station, the above mentioned second message is transmitted through an interface message of the Xn interface, which may be a HANDOVER REQUEST message. In case that there is no Xn interface between the target base station and the source base station, it needs to be forwarded through a core network and correspondingly an NG interface is used, and the above mentioned second message is transmitted through an interface message of the NG interface, which may be a HANDOVER REQUIRED message.

In some embodiments, the second message is transmitted to the target base station based on the retrieve terminal context request message, and the second message is a RETRIEVE UE CONTEXT RESPONSE message.

In an embodiment, the source base station may actively transmit the first configuration information, or may transmit the second message as a response message in response to a request transmitted from the target base station, where the second message includes the first configuration information. In this case, the second message may be an RRC message, such as a RETRIEVE UE CONTEXT RESPONSE message.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of TMGIs, where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

In an embodiment, the above mentioned first configuration information is different from the traditional QoE measurement configuration information, where the above mentioned first configuration information includes QoE measurement configuration information associated with the MBS, and may specifically include at least one of the following:
an addition of configuration associated with MBS to a service type configuration, such as broadcast service, multicast service, or broadcast and multicast service;
information of a list of TMGIs, where the list of TMGIs includes one or more TMGIs, and each of the TMGIs is used to indicate which TMGI's corresponding QoE measurement needs to be collected for the MBS;
a measurement duration, used to indicate a total duration for which a terminal performs QoE measurement for a certain MBS; or
a remaining duration, used to indicate a remaining duration for which a terminal performs QoE measurement for a certain MBS or certain MBSs.

The above various types of configuration information flexibly constitute the first configuration information, which is used to indicate the associated parameters for the terminal to perform QoE measurement for the MBS. It is beneficial for the terminal to determine more flexibly how to perform QoE measurement for the MBS based on the content in the first configuration information.

In some embodiments, the second indication information includes one or more of the following:
a service type, used to indicate that a configuration for MBS includes broadcast and/or multicast;
information of a list of TMGIs, where the list of TMGIs includes one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, where the control action includes pausing, resuming, deleting or establishing.

In an embodiment, after receiving the first configuration information, the source base station determines the corresponding second indication information based on its own supported capabilities or measurement requirements, and transmits the second indication information to the terminal. The second indication information may indicate for which MBS the terminal needs to continue to perform QoE measurement, or for which MBS the terminal does not need to continue to perform QoE measurement. The second indication information may include at least one of the following:
a service type, used to indicate that the configuration for MBS includes broadcast and/or multicast;
information of a list of TMGIs, where the list of TMGIs includes one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity, where the QoE session identity has a corresponding relationship with a QoE reference in the traditional QoE measurement configuration information, or they are the same; or
control indication information, used to indicate the control action of the terminal on the QoE measurement for the MBS, where the control action includes pausing, resuming, deleting or establishing, that is, the specific action of the terminal on the QoE measurement for the MBS may be determined directly based on the control indication information.

In the method for QoE measurement for MBS provided by the embodiments of the present application, the QoE parameters associated with MBS is included in traditional QoE measurement configuration, and during the movement of the terminal, the terminal controls the QoE measurement for the MBS by itself, or the terminal transmits the first configuration parameter including the QoE measurement configuration associated with the MBS to the target base station, and then the target base station controls the QoE measurement for the MBS, which ensures a continuity of QoE measurement for the MBS by the terminal during the movement procedure.

The following uses several examples to illustrate the method for QoE measurement for MBS provided by the present application.

### Example I: Support mobile continuity of QoE measurement for MBS in connected state

After a UE is configured with QoE measurement for an MBS in RRC connected state, in case that a handover occurs and after the UE hands over to a target cell, the target cell needs to determine whether the current QoE measurement is within a collection area. If the current QoE measurement is outside the area, the UE may be notified to release or delete the QoE measurement; or, if the UE hands over to the area again, the UE may be notified to establish or resume the QoE measurement. As such, the configuration parameters associated with the QoE measurement for the MBS need to be transferred during the handover procedure, to facilitate the deletion or establishment of the QoE measurement in the target cell.

The QoE configuration information has been transferred in the current handover procedure, but the QoE configuration information associated with MBS is absent. To support the mobile continuity of QoE measurement for MBS, at least one of the following needs to be added to a HANDOVER REQUEST message in a handover procedure of XN interface, a HANDOVER REQUIRED message for NG interface, and a HANDOVER REQUEST message for NG interface:
1) an addition of broadcast and/or multicast to a service type;
2) information of a list of temporary mobile group identities (TMGIs), where the list of TMGIs represents that for which TMGIs the QoE measurements need to be collected for broadcast or multicast;
3) a measurement duration, used to indicate how long the terminal may be used to perform QoE measurement collection; or
4) a remaining duration, used to indicate how much time is remaining for the terminal to perform QoE measurement collection.

### Example II: Support mobile continuity of QoE measurement for MBS in inactive state

After a UE is configured with QoE measurement for an MBS in connected state, in case that the UE enters inactive state, moves to another network node, and resumes a connection, whether the current QoE measurement is within a collection area also needs to be determined in the newly accessed cell. If the current QoE measurement is outside the area, the UE may be notified to release the QoE measurement; or, if the UE moves to the area again, the UE may be notified to establish the QoE measurement. As such, the configuration parameters associated with the QoE need to be transferred during the retrieve UE context procedure.

The QoE configuration information has been transferred in the current retrieve UE context procedure, but the QoE configuration information associated with MBS is absent. In order to support the mobile continuity of QoE measurement for MBS, at least one of the following needs to be added to a RETRIEVE UE CONTEXT RESPONSE message of an XN interface during the retrieve UE context procedure:
1) an addition of broadcast and/or multicast to a service type;
2) information of a list of temporary mobile group identities (TMGIs), where the list of TMGIs represents that for which TMGIs the QoE measurements need to be collected for broadcast or multicast;
3) a measurement duration, used to indicate how long the terminal may be used to perform QoE measurement collection; or
4) a remaining duration, used to indicate how much time is remaining for the terminal to perform QoE measurement collection.

### Example III: Support mobile continuity of QoE measurement for MBS in idle state

Different from Examples I and II, the UE moves in idle state, and the UE context cannot be transferred between network nodes. Since the UE enters idle state, the base station releases the UE context, and after the UE accesses a new base station, the new base station cannot find the old base station that the UE originally accessed to obtain the context. Therefore, if the newly accessed base station wants to obtain the QoE configuration information of the UE, the newly accessed base station may only obtain that from the UE through the air interface.

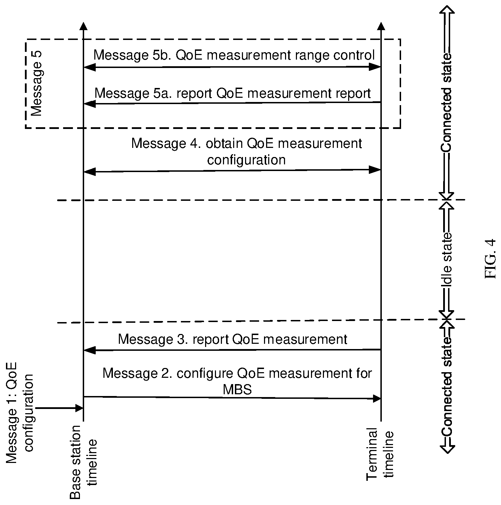

FIG. 4 is a first schematic flowchart of an implementation of a method for quality of experience (QoE) measurement for multicast broadcast service (MBS) according to an embodiment of the present application. As shown in FIG. 4, the terminal enters RRC idle state from RRC connected state, and then enters RRC connected state. The corresponding steps include the followings.

Message 1: The UE enters connected state, and the base station receives the QoE configuration message, where the message includes the QoE activation configuration information for a broadcast multicast service.

Message 2: The base station transmits the configured QoE measurement information of the broadcast multicast service to the UE in a message.

Message 3: In an embodiment, in case that the UE generates a QoE report, the UE reports the QoE report to the base station.

Message 4: After the UE goes through idle state and reconnects to the network, the new base station needs to obtain the previous QoE measurement configuration information for MBS.

Message 5: Based on the obtained QoE measurement configuration information for MBS, the QoE measurement report for the MBS is reported and QoE measurement range control is performed, which includes:
1. the received QoE measurement report (message 5a) may be transmitted to a management station, and an IP address, QoE reference, etc. of the management station need to be obtained;
2. QoE measurement range control (message 5b), the network needs to obtain the area range and determine whether the UE is still within the QoE measurement collection range for control;
3. newly accessed base station may need to configure and collect aligned minimization of drive test (MDT) measurements; and
4. newly accessed base station may need to configure and collect QoE measurements visible to the base station.

In order to meet the above requirements, the QoE measurement configuration information for MBS needs to be obtained from the terminal (UE). The information transmitted from the terminal to the newly accessed base station include at least one piece of the following information:
1) a QoE reference or QoE measurement configuration index with a mapping relationship;
2) a service type, indicating a QoE measurement for a broadcast service;
3) QoE measurement collection (QMC) configuration file;
4) information of a list of TMGIs, indicating for which TMGIs the QoE measurements need to be collected;
5) QoE collection entity address, indicating the IP address to which the QMC report will be transmitted;
6) area information, indicating in which cells or tracking areas the QoE measurement collection is performed;
7) information of a list of public land mobile networks (PLMNs), indicating in which PLMNs the QoE measurement collection is performed;
8) a measurement duration, indicating how long the terminal may be used to perform QoE measurement collection;
9) a remaining duration, indicating how much time is remaining for the terminal to perform QoE measurement collection;
10) MDT Trace ID, optionally present, indicating the MDT measurement that needs to be associated with the QoE measurement, and when analyzing the QoE measurement report, reference may be made to the MDT measurement report from the same time period; or
11) QoE measurement visible to the base station, optionally present, indicating the QoE measurement result transmitted to the base station for QoE analysis and optimization by the base station.

The above messages may be transferred through newly added messages or newly added fields in traditional messages.

### Example IV: Support collection range control of QoE measurement for MBS

A UE may receive a broadcast service in connected state, idle state and inactive state. In case that the UE moves to a new cell and the new cell is not within the QoE measurement collection area, the application layer needs to delete the QoE measurement. According to the original QoE measurement collection processing scheme in connected state, after the UE hands over outside the QoE measurement collection area, the base station may delete the QoE measurement, and after the UE moves into the QoE measurement collection area, the QoE measurement may be reconfigured. However, for UEs in idle state and inactive state, when the UE performs cell reselection between cells, the network does not know the specific location of the UE and cannot determine whether the UE is within the QoE measurement collection area. Only when the UE accesses to the network, it may be determined whether the UE is within the QoE measurement collection area.

In order to achieve QoE measurement collection area control, there are two schemes.

Scheme 1: a method controlled by a base station, where the base station controls QoE measurement by deleting/establishing QoE measurement, or pausing/resuming QoE measurement.

Scheme 2: a method controlled by UE access stratum (AS), where the base station transmits the QoE configuration for broadcast service to the UE, and the UE AS controls the application layer to start and stop QoE measurement based on the current location information.

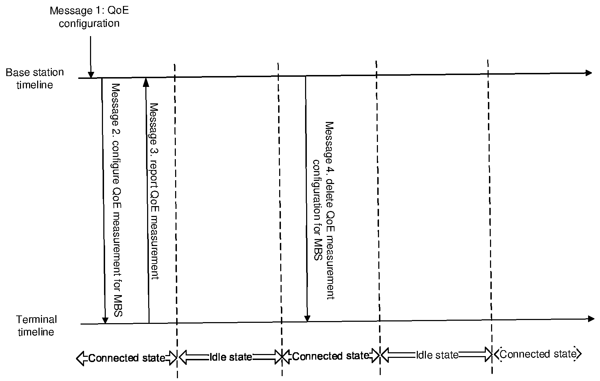

FIG. 5 is a second schematic flowchart of an implementation of a method for quality of experience (QoE) measurement for multicast broadcast service (MBS) according to an embodiment of the present application. As shown in FIG. 5, the implementation includes the followings.

Message 1: The UE enters connected state, and the base station receives the QoE configuration message, where the message includes the QoE activation configuration information for a broadcast multicast service.

Message 2: The base station transmits the configured QoE measurement information for the broadcast multicast service to the UE.

Message 3: In an embodiment, in case that the UE generates a QoE report, the UE reports the QoE report to the base station.

Message 4: After the UE goes through idle state and re-accesses to the network, the network determines that it is not within the QoE measurement collection area, and then the network deletes the QoE measurement configuration information or stops performing QoE measurement for the MBS.

In case that the UE subsequently moves into the QoE measurement collection area, the network needs to re-establish QoE measurement, and the newly accessed base station needs to obtain the QoE measurement configuration. For a handover in connected state, the method in Example I may be used; for a handover in inactive state, the method in Example II may be used; and for a handover in idle state, the method in Example III may be used.

For a scheme 1, the behaviors of the UE include the followings.
In case that the cell accessed by the UE is not within the QoE measurement collection area, the base station transmits an indication message of deleting and/or pausing to the UE, where the message carries at least one of the following:
1) QoE reference or QoE measurement configuration index with a mapping relationship;
2) a service type, indicating a QoE measurement for a broadcast service; or
3) information of a list of TMGIs, indicating for which TMGIs the QoE measurements need to be deleted and/or paused.

In case that the cell accessed by the UE is within the QoE measurement collection area, the base station transmits an indication message of establishing and/or resuming to the UE, where the message carries at least one of the following:
1) QoE reference or QoE measurement configuration index with a mapping relationship;
2) a service type, indicating a QoE measurement for a broadcast service;
3) information of a list of TMGIs, indicating for which TMGIs the QoE measurements need to be established and/or resumed;
4) in case that establishing the QoE measurement is indicated, the existing QoE measurement configuration information also needs to be carried;
5) a measurement duration, indicating how long the terminal may be used to perform QoE measurement collection; or
6) a remaining duration, indicating how much time is remaining for the terminal to perform QoE measurement collection.

For a scheme 2, the behaviors of the UE include the followings.
1. After receiving QoE measurement configuration from the base station, the access stratum (AS) of the UE stores the measurement configuration information, which includes the QoE measurement collection area.
2. In case that a cell to which the UE accesses or resides is not within the QoE measurement collection area, the access stratum (AS) of the UE notifies the application layer to delete or pause QoE measurement.
3. In case that the cell to which the UE accesses or resides is within the QoE measurement collection area, the access stratum (AS) of the UE notifies the application layer to establish or resume QoE measurement.

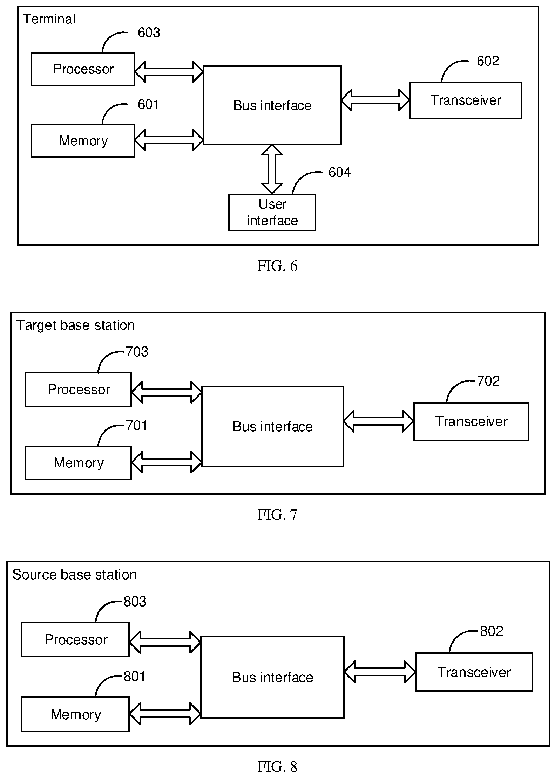

FIG. 6 is a schematic structural diagram of a terminal according to an embodiment of the present application. As shown in FIG. 6, the terminal includes a memory 601, a transceiver 602, and a processor 603, where
the memory 601 is used for storing a computer program; and the transceiver 602 is used for receiving and transmitting data under control of the processor 603.

In an embodiment, the transceiver 602 is used for receiving and transmitting data under control of the processor 603.

In FIG. 6, a bus architecture may include any number of interconnected buses and bridges, which are linked together through various circuits of one or more processors represented by the processor 603 and one or more memories represented by the memory 601. The bus architecture may also link together various other circuits, such as peripherals, voltage regulators, and power management circuits, etc., which are well known in the art, and therefore are not further described in the present application. The bus interface provides an interface. The transceiver 602 may include multiple elements, i.e., including a transmitter and a receiver, units for providing communication with various other devices over transmission media including wireless channels, wired channels, fiber optic cables, and the like. For different user equipment, a user interface 604 may be an interface capable of externally or internally connecting the required equipment, and the connected equipment includes, but not limited to, a small keypad, a display, a speaker, a microphone, a joystick, and the like.

The processor 603 is responsible for managing the bus architecture and general processing, and the memory 601 may store data used by the processor 603 when performing operations.

In some embodiments, the processor 603 may be a central processing unit (CPU), an application specific integrated circuit (ASIC), a field-programmable gate array (FPGA), or a complex programmable logic device (CPLD), the processor may also use a multi-core architecture.

The processor is configured to execute any of the methods performed by the terminal provided by the embodiments of the present application according to the obtained executable instructions by calling the computer program stored in the memory. The processor and memory may be physically separated.

The processor 603 is used for reading the computer program in the memory 601 and performing the following operations:
determining a control action of the terminal on a QoE measurement for an MBS based on received first configuration information; or
transmitting first configuration information and/or a QoE measurement report for an MBS generated by the terminal to a target base station, where the first configuration information is used to determine a control action of the terminal on a QoE measurement for an MBS;
where the first configuration information is QoE configuration information including a QoE configuration for the MBS, and the control action includes pausing, resuming, deleting or establishing.

In some embodiments, determining the control action of the terminal on the QoE measurement for the MBS based on the received first configuration information includes:
determining a collection area based on the first configuration information;
determining a belonging relationship between a current serving cell and the collection area; and
determining the control action of the terminal on the QoE measurement for the MBS based on the belonging relationship between the current serving cell and the collection area.

In some embodiments, determining the control action of the terminal on the QoE measurement for the MBS based on the belonging relationship between the current serving cell and the collection area includes:
determining whether the current serving cell is within the collection area; and
in case that the current serving cell is within the collection area, determining to establish or resume the QoE measurement for the MBS in the current serving cell; or, in case that the current serving cell is not within the collection area, determining to delete or pause the QoE measurement for the MBS in the current serving cell.

In some embodiments, before transmitting the first configuration information to the target base station, the operations include:
receiving a first request message transmitted from the target base station, where the first request message is used to obtain the first configuration information and/or the QoE measurement report for the MBS generated by the terminal.

In some embodiments, after transmitting the first configuration information to the target base station, the operations include:
determining a control action of the terminal on a QoE measurement for a specified MBS based on received second indication information,
where the second indication information is transmitted from a source base station or the target base station, and the QoE measurement for the specified MBS is QoE measurement for one or more of MBSs included in the first configuration information.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

FIG. 7 is a schematic structural diagram of a target base station according to an embodiment of the present application. As shown in FIG. 7, the target base station includes a memory 701, a transceiver 702, and a processor 703, where
the memory 701 is used for storing a computer program; and the transceiver 702 is used for receiving and transmitting data under control of the processor 703.

In an embodiment, the transceiver 702 is used for receiving and transmitting data under control of the processor 703.

In FIG. 7, a bus architecture may include any number of interconnected buses and bridges, which are linked together through various circuits of one or more processors represented by the processor 703 and one or more memories represented by the memory 701. The bus architecture may also link together various other circuits, such as peripherals, voltage regulators, and power management circuits, etc., which are well known in the art, and therefore are not further described in the present application. The bus interface provides an interface. The transceiver 702 may include multiple elements, i.e., including a transmitter and a receiver, units for providing communication with various other devices over transmission media including wireless channels, wired channels, fiber optic cables, and the like. The processor 703 is responsible for managing the bus architecture and general processing, and the memory 701 may store data used by the processor 703 when performing operations.

The processor 703 may be a central processing unit (CPU), an application specific integrated circuit (ASIC), a field-programmable gate array (FPGA), or a complex programmable logic device (CPLD), the processor may also use a multi-core architecture.

The processor 703, is used for reading the computer program in the memory 701 and performing the following operations:
obtaining first configuration information; and
determining a control action of a terminal on a QoE measurement for an MBS based on the first configuration information,
where the first configuration information is QoE configuration information including a QoE configuration for the MBS, and the control action includes pausing, resuming, deleting or establishing.

In some embodiments, obtaining the first configuration information includes:
transmitting a first request message to the terminal for obtaining the first configuration information and/or a QoE measurement report for the MBS generated by the terminal; or
receiving a second message transmitted from a source base station, where the second message carries the first configuration information.

In some embodiments, receiving the second message transmitted from the source base station includes:
receiving the second message transmitted from the source base station, where the second message carries the first configuration information, and the second message is a RETRIEVE UE CONTEXT RESPONSE message.

In some embodiments, receiving the second message transmitted from the source base station includes:
receiving the second message transmitted from the source base station through an Xn interface or an NG interface, where the second message carries the first configuration information,
where the second message transmitted through the Xn interface is a HANDOVER REQUEST message;
the second message transmitted through the NG interface is a HANDOVER REQUEST message, and the second message is transmitted after the source base station transmits a HANDOVER REQUIRED message to a core network.

In some embodiments, determining the control action of the terminal on the QoE measurement for the MBS based on the first configuration information includes:
determining a collection area based on the first configuration information;
determining a belonging relationship between the target base station and the collection area; and
determining the control action of the terminal on the QoE measurement for the MBS based on the belonging relationship between the target base station and the collection area.

In some embodiments, determining the control action of the terminal on the QoE measurement for the MBS based on the belonging relationship between the target base station and the collection area includes:
determining whether the target base station is within the collection area; and
in case that the target base station is within the collection area, transmitting second indication information to the terminal, where the second indication information is used to indicate the terminal to resume or establish a QoE measurement for a specified MBS; or, in case that the target base station is not within the collection area, transmitting a second message to the terminal, where the second indication information is used to indicate the terminal to pause or delete a QoE measurement for a specified MBS;
where the second indication information is determined based on the first configuration information and MBSs supported by the target base station.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

In some embodiments, the second indication information includes one or more of the following:
a service type, used to indicate that a configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, where the control action includes pausing, resuming, deleting or establishing.

FIG. 8 is a schematic structural diagram of a source base station according to an embodiment of the present application. As shown in FIG. 8, the source base station includes a memory 801, a transceiver 802, and a processor 803, where
the memory 801 is used for storing a computer program; and the transceiver 802 is used for receiving and transmitting data under control of the processor 803.

In an embodiment, the transceiver 802 is used for receiving and transmitting data under control of the processor 803.

In FIG. 8, a bus architecture may include any number of interconnected buses and bridges, which are linked together through various circuits of one or more processors represented by the processor 803 and one or more memories represented by the memory 801. The bus architecture may also link together various other circuits, such as peripherals, voltage regulators, and power management circuits, etc., which are well known in the art, and therefore are not further described in the present application. The bus interface provides an interface. The transceiver 802 may include multiple elements, i.e., including a transmitter and a receiver, units for providing communication with various other devices over transmission media including wireless channels, wired channels, fiber optic cables, and the like. The processor 803 is responsible for managing the bus architecture and general processing, and the memory 801 may store data used by the processor 803 when performing operations.

The processor 803 may be a central processing unit (CPU), an application specific integrated circuit (ASIC), a field-programmable gate array (FPGA), or a complex programmable logic device (CPLD), the processor may also use a multi-core architecture.

The processor 803 is used for reading the computer program in the memory 801 and performing the following operations:
determining a control action of a terminal on a QoE measurement for an MBS based on first configuration information; or
transmitting first configuration information to a target base station, where the first configuration information is used to determine a control action of a terminal on a QoE measurement for an MBS;
where the first configuration information is QoE configuration information including a QoE configuration for the MBS, and the control action includes pausing, resuming, deleting or establishing.

In some embodiments, determining the control action of the terminal on the QoE measurement for the MBS based on the first configuration information includes:
determining a collection area based on the first configuration information;
determining a belonging relationship between the source base station and the collection area; and
determining the control action of the terminal on the QoE measurement for the MBS based on the belonging relationship between the source base station and the collection area.

In some embodiments, determining the control action of the terminal on the QoE measurement for the MBS based on the belonging relationship between the source base station and the collection area includes:
determining whether the source base station is within the collection area; and
in case that the source base station is within the collection area, transmitting second indication information to the terminal, where the second indication information is used to indicate the terminal to resume or establish a QoE measurement for a specified MBS; or, in case that the source base station is not within the collection area, transmitting second indication information to the terminal, where the second indication information is used to indicate the terminal to pause or delete a QoE measurement for a specified MBS;
where the second indication information is determined based on the first configuration information and MBSs supported by the source base station.

In some embodiments, before transmitting the first configuration information to the target base station, the operations include:
determining whether the target base station is different from the source base station;
in case that the target base station is different from the source base station, transmitting a second message to the target base station, where the second message carries the first configuration information.

In some embodiments, transmitting the second message to the target base station includes:
in case that the terminal is in radio resource control (RRC) connected state at the source base station, transmitting the second message to the target base station based on a determined target interface; or
in case that the terminal is in radio resource control (RRC) inactive state after a connection of the terminal is released by the source base station, transmitting the second message to the target base station based on a retrieve terminal context request message.

In some embodiments, transmitting the second message to the target base station based on the determined target interface includes:
in case that the target interface is an Xn interface, the second message is a HANDOVER REQUEST message; or
in case that the target interface is an NG interface, the second message is a HANDOVER REQUEST message, and the second message is transmitted after the source base station transmits a HANDOVER REQUIRED message to a core network.

In some embodiments, the second message is transmitted to the target base station based on the retrieve terminal context request message, and the second message is a RETRIEVE UE CONTEXT RESPONSE message.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

In some embodiments, the second indication information includes one or more of the following:
a service type, used to indicate that a configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, where the control action includes pausing, resuming, deleting or establishing.

It should be noted here that the above mentioned electronic device provided by the embodiments of the present application may implement all the method steps implemented by the above mentioned method embodiments, and may achieve the same technical effect. The same parts and beneficial effects in the embodiments that are the same as those in the method embodiments are not described in detail.

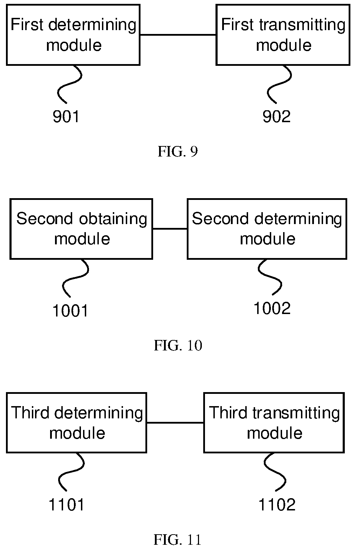

FIG. 9 is a first schematic structural diagram of an apparatus for quality of experience (QoE) measurement for multicast broadcast service (MBS) according to an embodiment of the present application, and the apparatus is used in a terminal. As shown in FIG. 9, the apparatus includes:
a first determining module 901, used for determining a control action of the terminal on a QoE measurement for an MBS based on received first configuration information; or
a first transmitting module 902, used for transmitting first configuration information and/or a QoE measurement report for an MBS generated by the terminal to a target base station, where the first configuration information is used to determine a control action of the terminal on a QoE measurement for an MBS;
where the first configuration information is QoE configuration information including a QoE configuration for the MBS, and the control action includes pausing, resuming, deleting or establishing.

In some embodiments, the first determining module 901, in the procedure of determining the control action of the terminal on the QoE measurement for the MBS based on the received first configuration information, is used for:
determining a collection area based on the first configuration information;
determining a belonging relationship between a current serving cell and the collection area; and
determining the control action of the terminal on the QoE measurement for the MBS based on the belonging relationship between the current serving cell and the collection area.

In some embodiments, determining the control action of the terminal on the QoE measurement for the MBS based on the belonging relationship between the current serving cell and the collection area includes:
determining whether the current serving cell is within the collection area; and
in case that the current serving cell is within the collection area, determining to establish or resume the QoE measurement for the MBS in the current serving cell; or, in case that the current serving cell is not within the collection area, determining to delete or pause the QoE measurement for the MBS in the current serving cell.

In some embodiments, the apparatus further includes a first receiving module 903, where the first receiving module 903 is used for:
receiving a first request message transmitted from the target base station, where the first request message is used to obtain the first configuration information and/or the QoE measurement report for the MBS generated by the terminal.

In some embodiments, the first determining module 901 is further used for:
determining a control action of the terminal on a QoE measurement for a specified MBS based on received second indication information,
where the second indication information is transmitted from a source base station or the target base station, and the QoE measurement for the specified MBS is QoE measurement for one or more of MBSs included in the first configuration information.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

FIG. 10 is a second schematic structural diagram of an apparatus for quality of experience (QoE) measurement for multicast broadcast service (MBS), and the apparatus is used in a target base station. As shown in FIG. 10, the apparatus includes:
a second obtaining module 1001, used for obtaining first configuration information; and
a second determining module 1002, used for determining a control action of a terminal on a QoE measurement for an MBS based on the first configuration information,
where the first configuration information is QoE configuration information including a QoE configuration for the MBS, and the control action includes pausing, resuming, deleting or establishing.

In some embodiments, the apparatus further includes:
a second transmitting module 1003, used for transmitting a first request message to the terminal for obtaining the first configuration information and/or a QoE measurement report for the MBS generated by the terminal; or
a second receiving module 1004, used for receiving a second message transmitted from a source base station, where the second message carries the first configuration information.

In some embodiments, the second receiving module 1004, in the procedure of receiving the second message transmitted from the source base station, is used for:
receiving the second message transmitted from the source base station, where the second message carries the first configuration information, and the second message is a RETRIEVE UE CONTEXT RESPONSE message.

In some embodiments, the second receiving module 1004, in the procedure of receiving the second message transmitted from the source base station, is used for:
receiving the second message transmitted from the source base station through an Xn interface or an NG interface, where the second message carries the first configuration information,
where the second message transmitted through the Xn interface is a HANDOVER REQUEST message;
the second message transmitted through the NG interface is a HANDOVER REQUEST message, and the second message is transmitted after the source base station transmits a HANDOVER REQUIRED message to a core network.

In some embodiments, the second determining module 1002, in the procedure of determining the control action of the terminal on the QoE measurement for the MBS based on the first configuration information, is used for:
determining a collection area based on the first configuration information;
determining a belonging relationship between the target base station and the collection area; and
determining the control action of the terminal on the QoE measurement for the MBS based on the belonging relationship between the target base station and the collection area.

In some embodiments, the second determining module 1002 is used for:
determining whether the target base station is within the collection area; and
in case that the target base station is within the collection area, transmitting second indication information to the terminal, where the second indication information is used to indicate the terminal to resume or establish a QoE measurement for a specified MBS; or, in case that the target base station is not within the collection area, transmitting second indication information to the terminal, where the second indication information is used to indicate the terminal to pause or delete a QoE measurement for a specified MBS;
where the second indication information is determined based on the first configuration information and MBSs supported by the target base station.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

In some embodiments, the second indication information includes one or more of the following:
a service type, used to indicate that a configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, where the control action includes pausing, resuming, deleting or establishing.

FIG. 11 is a third schematic structural diagram of an apparatus for quality of experience (QoE) measurement for multicast broadcast service (MBS), and the apparatus is used in a source base station. As shown in FIG. 11, the apparatus includes:
a third determining module 1101, used for determining a control action of a terminal on a QoE measurement for an MBS based on first configuration information; or
a third transmitting module 1102, used for transmitting first configuration information to a target base station, where the first configuration information is used to determine a control action of a terminal on a QoE measurement for an MBS;
where the first configuration information is QoE configuration information including a QoE configuration for the MBS, and the control action includes pausing, resuming, deleting or establishing.

In some embodiments, the third determining module 1101, in the procedure of determining the control action of the terminal on the QoE measurement for the MBS based on the first configuration information, is used for:
determining a collection area based on the first configuration information;
determining a belonging relationship between the source base station and the collection area; and
determining the control action of the terminal on the QoE measurement for the MBS based on the belonging relationship between the source base station and the collection area.

In some embodiments, the third determining module 1101 is used for:
determining whether the source base station is within the collection area; and
in case that the source base station is within the collection area, transmitting second indication information to the terminal, where the second indication information is used to indicate the terminal to resume or establish a QoE measurement for a specified MBS; or, in case that the source base station is not within the collection area, transmitting second indication information to the terminal, where the second indication information is used to indicate the terminal to pause or delete a QoE measurement for a specified MBS;
where the second indication information is determined based on the first configuration information and MBSs supported by the source base station.

In some embodiments, the third determining module 1101 is used for:
determining whether the target base station is different from the source base station;
in case that the target base station is different from the source base station, transmitting a second message to the target base station, where the second message carries the first configuration information.

In some embodiments, the third transmitting module 1102, in the procedure of transmitting the second message to the target base station, is used for:
in case that the terminal is in radio resource control (RRC) connected state at the source base station, transmitting the second message to the target base station based on a determined target interface; or
in case that the terminal is in radio resource control (RRC) inactive state after a connection of the terminal is released by the source base station, transmitting the second message to the target base station based on a retrieve terminal context request message.

In some embodiments, transmitting the second message to the target base station based on the determined target interface includes:
in case that the target interface is an Xn interface, the second message is a HANDOVER REQUEST message; or
in case that the target interface is an NG interface, the second message is a HANDOVER REQUEST message, and the second message is transmitted after the source base station transmits a HANDOVER REQUIRED message to a core network.

In some embodiments, the second message is transmitted to the target base station based on the retrieve terminal context request message, and the second message is a RETRIEVE UE CONTEXT RESPONSE message.

In some embodiments, the first configuration information is QoE configuration information including QoE configuration for the MBS, and the QoE configuration for the MBS includes one or more of the following:
an addition of a configuration for MBS to a service type, where the configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

In some embodiments, the second indication information includes one or more of the following:
a service type, used to indicate that a configuration for MBS includes broadcast and/or multicast;
information of a list of temporary mobile group identities (TMGIs), where the list of TMGIs includes one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, where the control action includes pausing, resuming, deleting or establishing.

The methods and apparatuses provided in the embodiments of the present application are based on the same conception. Since the methods and apparatuses solve problems in similar principles, the implementation of the apparatuses and methods may be referred to each other, and repeated details are not repeated.

It should be noted that the division of units in the embodiments of the present application is schematic and is only a logical function division. In actual implementation, there may be other division methods. In addition, each functional unit in various embodiments of the present application may be integrated into one processing unit, or each unit may exist physically alone, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

It should be noted here that the above mentioned devices provided by the embodiments of the present application may implement all the method steps implemented by the above mentioned method embodiments, and may achieve the same technical effect. The same parts and beneficial effects in the embodiments that are the same as those in the method embodiments are not described in detail.

On the other hand, an embodiment of the present application provides a computer-readable storage medium that stores a computer program. The computer program is used to cause a computer to perform any of the methods provided by the embodiments of the present application.

It should be noted here that the above mentioned computer-readable storage medium provided by the embodiment of the present application may implement all the method steps implemented by the above mentioned method embodiments, and may achieve the same technical effect. The same parts and beneficial effects in the embodiments that are the same as those in the method embodiments are not described in detail.

The computer-readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, especially 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station. The base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for quality of experience, QoE, measurement for multicast broadcast service, MBS, performed by a terminal, comprising:
determining a control action of the terminal on a QoE measurement for an MBS based on received first configuration information; or
transmitting first configuration information and/or a QoE measurement report for an MBS generated by the terminal to a target base station, wherein the first configuration information is used to determine a control action of the terminal on a QoE measurement for an MBS;
wherein the first configuration information is QoE configuration information comprising a QoE configuration for the MBS, and the control action comprises pausing, resuming, deleting or establishing.

2. The method of claim 1, wherein determining the control action of the terminal on the QoE measurement for the MBS based on the received first configuration information comprises:
determining a collection area based on the first configuration information;
determining a belonging relationship between a current serving cell and the collection area; and
determining the control action of the terminal on the QoE measurement for the MBS based on the belonging relationship between the current serving cell and the collection area.

3. The method of claim 2, wherein determining the control action of the terminal on the QoE measurement for the MBS based on the belonging relationship between the current serving cell and the collection area comprises:
determining whether the current serving cell is within the collection area; and
in case that the current serving cell is within the collection area, determining to establish or resume the QoE measurement for the MBS in the current serving cell; or, in case that the current serving cell is not within the collection area, determining to delete or pause the QoE measurement for the MBS in the current serving cell.

4. The method of claim 1, wherein before transmitting the first configuration information to the target base station, the method comprises:
receiving a first request message transmitted from the target base station, wherein the first request message is used to obtain the first configuration information and/or the QoE measurement report for the MBS generated by the terminal.

5. The method of claim 1, wherein after transmitting the first configuration information to the target base station, the method comprises:
determining a control action of the terminal on a QoE measurement for a specified MBS based on received second indication information,
wherein the second indication information is transmitted from a source base station or the target base station, and the QoE measurement for the specified MBS is QoE measurement for one or more of MBSs comprised in the first configuration information.

6. The method of any of claims 1 to 5, wherein the first configuration information is QoE configuration information comprising QoE configuration for the MBS, and the QoE configuration for the MBS comprises one or more of the following:
an addition of a configuration for MBS to a service type, wherein the configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

7. A method for quality of experience, QoE, measurement for multicast broadcast service, MBS, performed by a target base station, comprising:
obtaining first configuration information; and
determining a control action of a terminal on a QoE measurement for an MBS based on the first configuration information,
wherein the first configuration information is QoE configuration information comprising a QoE configuration for the MBS, and the control action comprises pausing, resuming, deleting or establishing.

8. The method of claim 7, wherein obtaining the first configuration information comprises:
transmitting a first request message to the terminal for obtaining the first configuration information and/or a QoE measurement report for the MBS generated by the terminal; or
receiving a second message transmitted from a source base station, wherein the second message carries the first configuration information.

9. The method of claim 8, wherein receiving the second message transmitted from the source base station comprises:
receiving the second message transmitted from the source base station, wherein the second message carries the first configuration information, and the second message is a RETRIEVE UE CONTEXT RESPONSE message.

10. The method of claim 8, wherein receiving the second message transmitted from the source base station comprises:
receiving the second message transmitted from the source base station through an Xn interface or an NG interface, wherein the second message carries the first configuration information,
wherein the second message transmitted through the Xn interface is a HANDOVER REQUEST message; and
the second message transmitted through the NG interface is a HANDOVER REQUEST message, and the second message is transmitted after the source base station transmits a HANDOVER REQUIRED message to a core network.

11. The method of claim 7, wherein determining the control action of the terminal on the QoE measurement for the MBS based on the first configuration information comprises:
determining a collection area based on the first configuration information;
determining a belonging relationship between the target base station and the collection area; and
determining the control action of the terminal on the QoE measurement for the MBS based on the belonging relationship between the target base station and the collection area.

12. The method of claim 11, wherein determining the control action of the terminal on the QoE measurement for the MBS based on the belonging relationship between the target base station and the collection area comprises:
determining whether the target base station is within the collection area; and
in case that the target base station is within the collection area, transmitting second indication information to the terminal, wherein the second indication information is used to indicate the terminal to resume or establish a QoE measurement for a specified MBS; or, in case that the target base station is not within the collection area, transmitting a second message to the terminal, wherein the second indication information is used to indicate the terminal to pause or delete a QoE measurement for a specified MBS;
wherein the second indication information is determined based on the first configuration information and MBSs supported by the target base station.

13. The method of any of claims 7 to 12, wherein the first configuration information is QoE configuration information comprising QoE configuration for the MBS, and the QoE configuration for the MBS comprises one or more of the following:
an addition of a configuration for MBS to a service type, wherein the configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

14. The method of claim 12, wherein the second indication information comprises one or more of the following:
a service type, used to indicate that a configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, wherein the control action comprises pausing, resuming, deleting or establishing.

15. A method for quality of experience, QoE, measurement for multicast broadcast service, MBS, performed by a source base station, comprising:
determining a control action of a terminal on a QoE measurement for an MBS based on first configuration information; or
transmitting first configuration information to a target base station, wherein the first configuration information is used to determine a control action of a terminal on a QoE measurement for an MBS;
wherein the first configuration information is QoE configuration information comprising a QoE configuration for the MBS, and the control action comprises pausing, resuming, deleting or establishing.

16. The method of claim 15, wherein determining the control action of the terminal on the QoE measurement for the MBS based on the first configuration information comprises:
determining a collection area based on the first configuration information;
determining a belonging relationship between the source base station and the collection area; and
determining the control action of the terminal on the QoE measurement for the MBS based on the belonging relationship between the source base station and the collection area.

17. The method of claim 16, wherein determining the control action of the terminal on the QoE measurement for the MBS based on the belonging relationship between the source base station and the collection area comprises:
determining whether the source base station is within the collection area; and
in case that the source base station is within the collection area, transmitting second indication information to the terminal, wherein the second indication information is used to indicate the terminal to resume or establish a QoE measurement for a specified MBS; or, in case that the source base station is not within the collection area, transmitting second indication information to the terminal, wherein the second indication information is used to indicate the terminal to pause or delete a QoE measurement for a specified MBS;
wherein the second indication information is determined based on the first configuration information and MBSs supported by the source base station.

18. The method of claim 15, wherein before transmitting the first configuration information to the target base station, the method comprises:
determining whether the target base station is different from the source base station;
in case that the target base station is different from the source base station, transmitting a second message to the target base station, wherein the second message carries the first configuration information.

19. The method of claim 18, wherein transmitting the second message to the target base station comprises:
in case that the terminal is in radio resource control, RRC, connected state at the source base station, transmitting the second message to the target base station based on a determined target interface; or
in case that the terminal is in radio resource control, RRC, inactive state after a connection of the terminal is released by the source base station, transmitting the second message to the target base station based on a retrieve terminal context request message.

20. The method of claim 19, wherein transmitting the second message to the target base station based on the determined target interface comprises:
in case that the target interface is an Xn interface, the second message is a HANDOVER REQUEST message; or
in case that the target interface is an NG interface, the second message is a HANDOVER REQUEST message, and the second message is transmitted after the source base station transmits a HANDOVER REQUIRED message to a core network.

21. The method of claim 19, wherein the second message is transmitted to the target base station based on the retrieve terminal context request message, and the second message is a RETRIEVE UE CONTEXT RESPONSE message.

22. The method of any of claims 15 to 21, wherein the first configuration information is QoE configuration information comprising QoE configuration for the MBS, and the QoE configuration for the MBS comprises one or more of the following:
an addition of a configuration for MBS to a service type, wherein the configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

23. The method of claim 17, wherein the second indication information comprises one or more of the following:
a service type, used to indicate that a configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, wherein the control action comprises pausing, resuming, deleting or establishing.

24. A terminal, comprising: a memory, a transceiver, and a processor,
wherein the memory is used for storing a computer program; the transceiver is used for receiving and transmitting data under control of the processor; and the processor is used for reading the computer program in the memory and performing the following operations:
determining a control action of the terminal on a quality of experience, QoE, measurement for a multicast broadcast service, MBS, based on received first configuration information; or
transmitting first configuration information and/or a quality of experience, QoE, measurement report for a multicast broadcast service, MBS, generated by the terminal to a target base station, wherein the first configuration information is used to determine a control action of the terminal on a QoE measurement for an MBS;
wherein the first configuration information is QoE configuration information comprising a QoE configuration for the MBS, and the control action comprises pausing, resuming, deleting or establishing.

25. The terminal of claim 24, wherein determining the control action of the terminal on the QoE measurement for the MBS based on the received first configuration information comprises:
determining a collection area based on the first configuration information;
determining a belonging relationship between a current serving cell and the collection area; and
determining the control action of the terminal on the QoE measurement for the MBS based on the belonging relationship between the current serving cell and the collection area.

26. The terminal of claim 25, wherein determining the control action of the terminal on the QoE measurement for the MBS based on the belonging relationship between the current serving cell and the collection area comprises:
determining whether the current serving cell is within the collection area; and
in case that the current serving cell is within the collection area, determining to establish or resume the QoE measurement for the MBS in the current serving cell; or, in case that the current serving cell is not within the collection area, determining to delete or pause the QoE measurement for the MBS in the current serving cell.

27. The terminal of claim 24, wherein before transmitting the first configuration information to the target base station, the operations comprise:
receiving a first request message transmitted from the target base station, wherein the first request message is used to obtain the first configuration information.

28. The terminal of claim 24, wherein after transmitting the first configuration information to the target base station, the operations comprise:
determining a control action of the terminal on a QoE measurement for a specified MBS based on received second indication information,
wherein the second indication information is transmitted from a source base station or the target base station, and the QoE measurement for the specified MBS is QoE measurement for one or more of MBSs comprised in the first configuration information.

29. The terminal of any of claims 24 to 28, wherein the first configuration information is QoE configuration information comprising QoE configuration for the MBS, and the QoE configuration for the MBS comprises one or more of the following:
an addition of a configuration for MBS to a service type, wherein the configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

30. A target base station, comprising: a memory, a transceiver, and a processor,
wherein the memory is used for storing a computer program; the transceiver is used for receiving and transmitting data under control of the processor; and the processor is used for reading the computer program in the memory and performing the following operations:
obtaining first configuration information; and
determining a control action of a terminal on a quality of experience, QoE, measurement for a multicast broadcast service, MBS, based on the first configuration information,
wherein the first configuration information is QoE configuration information comprising a QoE configuration for the MBS, and the control action comprises pausing, resuming, deleting or establishing.

31. The target base station of claim 30, wherein obtaining the first configuration information comprises:
transmitting a first request message to the terminal for obtaining the first configuration information and/or a QoE measurement report for the MBS generated by the terminal; or
receiving a second message transmitted from a source base station, wherein the second message carries the first configuration information.

32. The target base station of claim 31, wherein receiving the second message transmitted from the source base station comprises:
receiving the second message transmitted from the source base station, wherein the second message carries the first configuration information, and the second message is a RETRIEVE UE CONTEXT RESPONSE message.

33. The target base station of claim 31, wherein receiving the second message transmitted from the source base station comprises:
receiving the second message transmitted from the source base station through an Xn interface or an NG interface, wherein the second message carries the first configuration information,
wherein the second message transmitted through the Xn interface is a HANDOVER REQUEST message; and
the second message transmitted through the NG interface is a HANDOVER REQUEST message, and the second message is transmitted after the source base station transmits a HANDOVER REQUIRED message to a core network.

34. The target base station of claim 30, wherein determining the control action of the terminal on the QoE measurement for the MBS based on the first configuration information comprises:
determining a collection area based on the first configuration information;
determining a belonging relationship between the target base station and the collection area; and
determining the control action of the terminal on the QoE measurement for the MBS based on the belonging relationship between the target base station and the collection area.

35. The target base station of claim 34, wherein determining the control action of the terminal on the QoE measurement for the MBS based on the belonging relationship between the target base station and the collection area comprises:
determining whether the target base station is within the collection area; and
in case that the target base station is within the collection area, transmitting second indication information to the terminal, wherein the second indication information is used to indicate the terminal to resume or establish a QoE measurement for a specified MBS; or, in case that the target base station is not within the collection area, transmitting a second message to the terminal, wherein the second indication information is used to indicate the terminal to pause or delete a QoE measurement for a specified MBS;
wherein the second indication information is determined based on the first configuration information and MBSs supported by the target base station.

36. The target base station of any of claims 30 to 35, wherein the first configuration information is QoE configuration information comprising QoE configuration for the MBS, and the QoE configuration for the MBS comprises one or more of the following:
an addition of a configuration for MBS to a service type, wherein the configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

37. The target base station of claim 35, wherein the second indication information comprises one or more of the following:
a service type, used to indicate that a configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, wherein the control action comprises pausing, resuming, deleting or establishing.

38. A source base station, comprising: a memory, a transceiver, and a processor,
wherein the memory is used for storing a computer program; the transceiver is used for receiving and transmitting data under control of the processor; and the processor is used for reading the computer program in the memory and performing the following operations:
determining a control action of a terminal on a quality of experience, QoE, measurement for a multicast broadcast service, MBS, based on first configuration information; or
transmitting first configuration information to a target base station, wherein the first configuration information is used to determine a control action of a terminal on a quality of experience, QoE, measurement for a multicast broadcast service, MBS;
wherein the first configuration information is QoE configuration information comprising a QoE configuration for the MBS, and the control action comprises pausing, resuming, deleting or establishing.

39. The source base station of claim 38, wherein determining the control action of the terminal on the QoE measurement for the MBS based on the first configuration information comprises:
determining a collection area based on the first configuration information;
determining a belonging relationship between the source base station and the collection area; and
determining the control action of the terminal on the QoE measurement for the MBS based on the belonging relationship between the source base station and the collection area.

40. The source base station of claim 39, wherein determining the control action of the terminal on the QoE measurement for the MBS based on the belonging relationship between the source base station and the collection area comprises:
determining whether the source base station is within the collection area; and
in case that the source base station is within the collection area, transmitting second indication information to the terminal, wherein the second indication information is used to indicate the terminal to resume or establish a QoE measurement for a specified MBS; or, in case that the source base station is not within the collection area, transmitting second indication information to the terminal, wherein the second indication information is used to indicate the terminal to pause or delete a QoE measurement for a specified MBS;
wherein the second indication information is determined based on the first configuration information and MBSs supported by the source base station.

41. The source base station of claim 38, wherein before transmitting the first configuration information to the target base station, the operations comprise:
determining whether the target base station is different from the source base station;
in case that the target base station is different from the source base station, transmitting a second message to the target base station, wherein the second message carries the first configuration information.

42. The source base station of claim 41, wherein transmitting the second message to the target base station comprises:
in case that the terminal is in radio resource control, RRC, connected state at the source base station, transmitting the second message to the target base station based on a determined target interface; or
in case that the terminal is in radio resource control, RRC, inactive state after a connection of the terminal is released by the source base station, transmitting the second message to the target base station based on a retrieve terminal context request message.

43. The source base station of claim 42, wherein transmitting the second message to the target base station based on the determined target interface comprises:
in case that the target interface is an Xn interface, the second message is a HANDOVER REQUEST message; or
in case that the target interface is an NG interface, the second message is a HANDOVER REQUEST message, and the second message is transmitted after the source base station transmits a HANDOVER REQUIRED message to a core network.

44. The source base station of claim 42, wherein the second message is transmitted to the target base station based on the retrieve terminal context request message, and the second message is a RETRIEVE UE CONTEXT RESPONSE message.

45. The source base station of any of claims 38 to 44, wherein the first configuration information is QoE configuration information comprising QoE configuration for the MBS, and the QoE configuration for the MBS comprises one or more of the following:
an addition of a configuration for MBS to a service type, wherein the configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

46. The source base station of claim 40, wherein the second indication information comprises one or more of the following:
a service type, used to indicate that a configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, wherein the control action comprises pausing, resuming, deleting or establishing.

47. An apparatus for quality of experience, QoE, measurement for multicast broadcast service, MBS, used in a terminal, comprising:
a first determining module, used for determining a control action of the terminal on a QoE measurement for an MBS based on received first configuration information; or
a first transmitting module, used for transmitting first configuration information and/or a QoE measurement report for an MBS generated by the terminal to a target base station, wherein the first configuration information is used to determine a control action of the terminal on a QoE measurement for an MBS;
wherein the first configuration information is QoE configuration information comprising a QoE configuration for the MBS, and the control action comprises pausing, resuming, deleting or establishing.

48. The apparatus of claim 47, wherein the first determining module, in a procedure of determining the control action of the terminal on the QoE measurement for the MBS based on the received first configuration information, is used for:
determining a collection area based on the first configuration information;
determining a belonging relationship between a current serving cell and the collection area; and
determining the control action of the terminal on the QoE measurement for the MBS based on the belonging relationship between the current serving cell and the collection area.

49. The apparatus of claim 48, wherein determining the control action of the terminal on the QoE measurement for the MBS based on the belonging relationship between the current serving cell and the collection area comprises:
determining whether the current serving cell is within the collection area; and
in case that the current serving cell is within the collection area, determining to establish or resume the QoE measurement for the MBS in the current serving cell; or, in case that the current serving cell is not within the collection area, determining to delete or pause the QoE measurement for the MBS in the current serving cell.

50. The apparatus of claim 47, further comprising a first receiving module, wherein the first receiving module is used for:
receiving a first request message transmitted from the target base station, wherein the first request message is used to obtain the first configuration information and/or the QoE measurement report for the MBS generated by the terminal.

51. The apparatus of claim 47, wherein the first determining module is used for:
determining a control action of the terminal on a QoE measurement for a specified MBS based on received second indication information,
wherein the second indication information is transmitted from a source base station or the target base station, and the QoE measurement for the specified MBS is QoE measurement for one or more of MBSs comprised in the first configuration information.

52. The apparatus of any of claims 47 to 51, wherein the first configuration information is QoE configuration information comprising QoE configuration for the MBS, and the QoE configuration for the MBS comprises one or more of the following:
an addition of a configuration for MBS to a service type, wherein the configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a measurement duration, used to indicate total time of the terminal performing QoE measurement for the MBS; or
a remaining duration, used to indicate remaining time of the terminal performing QoE measurement for the MBS.

53. An apparatus for quality of experience, QoE, measurement for multicast broadcast service, MBS, used in a target base station, comprising:
a second obtaining module, used for obtaining first configuration information; and
a second determining module, used for determining a control action of a terminal on a QoE measurement for an MBS based on the first configuration information,
wherein the first configuration information is QoE configuration information comprising a QoE configuration for the MBS, and the control action comprises pausing, resuming, deleting or establishing.

54. The apparatus of claim 53, further comprising:
a second transmitting module, used for transmitting a first request message to the terminal for obtaining the first configuration information and/or a QoE measurement report for the MBS generated by the terminal; or
a second receiving module, used for receiving a second message transmitted from a source base station, wherein the second message carries the first configuration information.

55. The apparatus of claim 54, wherein the second receiving module, in a procedure of receiving the second message transmitted from the source base station, is used for:
receiving the second message transmitted from the source base station, wherein the second message carries the first configuration information, and the second message is a RETRIEVE UE CONTEXT RESPONSE message.

56. The apparatus of claim 54, wherein the second receiving module, in a procedure of receiving the second message transmitted from the source base station, is used for:
receiving the second message transmitted from the source base station through an Xn interface or an NG interface, wherein the second message carries the first configuration information,
wherein the second message transmitted through the Xn interface is a HANDOVER REQUEST message; and
the second message transmitted through the NG interface is a HANDOVER REQUEST message, and the second message is transmitted after the source base station transmits a HANDOVER REQUIRED message to a core network.

57. The apparatus of claim 53, wherein the second determining module, in a procedure of determining the control action of the terminal on the QoE measurement for the MBS based on the first configuration information, is used for:
determining a collection area based on the first configuration information;
determining a belonging relationship between the target base station and the collection area; and
determining the control action of the terminal on the QoE measurement for the MBS based on the belonging relationship between the target base station and the collection area.

58. The apparatus of claim 57, wherein the second determining module is further used for:
determining whether the target base station is within the collection area; and
in case that the target base station is within the collection area, transmitting second indication information to the terminal, wherein the second indication information is used to indicate the terminal to resume or establish a QoE measurement for a specified MBS; or, in case that the target base station is not within the collection area, transmitting a second message to the terminal, wherein the second indication information is used to indicate the terminal to pause or delete a QoE measurement for a specified MBS;
wherein the second indication information is determined based on the first configuration information and MBSs supported by the target base station.

59. The apparatus of any of claims 53 to 58, wherein the first configuration information is QoE configuration information comprising QoE configuration for the MBS, and the QoE configuration for the MBS comprises one or more of the following:
an addition of a configuration for MBS to a service type, wherein the configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

60. The apparatus of claim 58, wherein the second indication information comprises one or more of the following:
a service type, used to indicate that a configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, wherein the control action comprises pausing, resuming, deleting or establishing.

61. An apparatus for quality of experience, QoE, measurement for multicast broadcast service, MBS, used in a source base station, comprising:
a third determining module, used for determining a control action of a terminal on a QoE measurement for an MBS based on first configuration information; or
a third transmitting module, used for transmitting first configuration information to a target base station, wherein the first configuration information is used to determine a control action of a terminal on a QoE measurement for an MBS;
wherein the first configuration information is QoE configuration information comprising a QoE configuration for the MBS, and the control action comprises pausing, resuming, deleting or establishing.

62. The apparatus of claim 61, wherein the third determining module, in a procedure of determining the control action of the terminal on the QoE measurement for the MBS based on the first configuration information, is used for:
determining a collection area based on the first configuration information;
determining a belonging relationship between the source base station and the collection area; and
determining the control action of the terminal on the QoE measurement for the MBS based on the belonging relationship between the source base station and the collection area.

63. The apparatus of claim 62, wherein the third determining module is further used for:
determining whether the source base station is within the collection area; and
in case that the source base station is within the collection area, transmitting second indication information to the terminal, wherein the second indication information is used to indicate the terminal to resume or establish a QoE measurement for a specified MBS; or, in case that the source base station is not within the collection area, transmitting second indication information to the terminal, wherein the second indication information is used to indicate the terminal to pause or delete a QoE measurement for a specified MBS;
wherein the second indication information is determined based on the first configuration information and MBSs supported by the source base station.

64. The apparatus of claim 61, wherein the third determining module is further used for:
determining whether the target base station is different from the source base station;
in case that the target base station is different from the source base station, transmitting a second message to the target base station, wherein the second message carries the first configuration information.

65. The apparatus of claim 64, wherein the third transmitting module, in a procedure of transmitting the second message to the target base station, is used for:
in case that the terminal is in radio resource control, RRC, connected state at the source base station, transmitting the second message to the target base station based on a determined target interface; or
in case that the terminal is in radio resource control, RRC, inactive state after a connection of the terminal is released by the source base station, transmitting the second message to the target base station based on a retrieve terminal context request message.

66. The apparatus of claim 65, wherein transmitting the second message to the target base station based on the determined target interface comprises:
in case that the target interface is an Xn interface, the second message is a HANDOVER REQUEST message; or
in case that the target interface is an NG interface, the second message is a HANDOVER REQUEST message, and the second message is transmitted after the source base station transmits a HANDOVER REQUIRED message to a core network.

67. The apparatus of claim 65, wherein the second message is transmitted to the target base station based on the retrieve terminal context request message, and the second message is a RETRIEVE UE CONTEXT RESPONSE message.

68. The apparatus of any of claims 61 to 67, wherein the first configuration information is QoE configuration information comprising QoE configuration for the MBS, and the QoE configuration for the MBS comprises one or more of the following:
an addition of a configuration for MBS to a service type, wherein the configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a measurement duration, used to indicate a total duration for which a terminal performs QoE measurement for the MBS; or
a remaining duration, used to indicate a remaining duration for which a terminal performs QoE measurement for the MBS.

69. The apparatus of claim 63, wherein the second indication information comprises one or more of the following:
a service type, used to indicate that a configuration for MBS comprises broadcast and/or multicast;
information of a list of temporary mobile group identities, TMGIs, wherein the list of TMGIs comprises one or more TMGIs, and each of the TMGIs is used to indicate that a QoE measurement corresponding to the each of the TMGIs needs to be collected for the MBS;
a QoE session identity or a QoE measurement configuration index having a mapping relationship with a QoE session identity; or
control indication information, used to indicate the control action of the terminal on the QoE measurement for the MBS, wherein the control action comprises pausing, resuming, deleting or establishing.

70. A computer-readable storage medium, wherein the computer-readable storage medium stores a computer program for causing a computer to perform the method of any of claims 1 to 6, or the method of any of claims 7 to 14, or the method of any of claims 15 to 23.
